# EUROPÄISCHE PATENTSCHRIFT

(11) **EP 3 619 063 B1**
(45) Veröffentlichungstag und Bekanntmachung des Hinweises auf die Patenterteilung: **04.08.2021**
(21) Anmeldenummer: 18719485.7
(22) Anmeldetag: 12.04.2018
(51) Int. Cl.: B60G 17/015, B60G 17/056, B60G 17/052, F04B 25/00, F04B 41/06, F04B 49/08, F04B 49/22, F04B 49/03

(54) **VERFAHREN ZUM BETREIBEN EINER DRUCKREGELANLAGE MIT EINEM MEHRSTUFIGEN KOMPRESSOR, SOWIE DRUCKREGELANLAGE**
METHOD FOR OPERATING A PRESSURE CONTROL SYSTEM COMPRISING A MULTI-STAGE COMPRESSOR, AND PRESSURE CONTROL SYSTEM
PROCÉDÉ POUR FAIRE FONCTIONNER UN SYSTÈME RÉGULATEUR DE PRESSION AVEC UN COMPRESSEUR À PLUSIEURS ÉTAGES, AINSI QUE SYSTÈME RÉGULATEUR DE PRESSION

(30) Priorität: 05.05.2017 DE 102017004360
(43) Veröffentlichungstag der Anmeldung: 11.03.2020
(73) Patentinhaber: ZF CV Systems Hannover GmbH, 30453 Hannover (DE)
(72) Erfinder: STABENOW, Uwe, 30880 Laatzen (DE)
(74) Vertreter: Rabe, Dirk-Heinrich
(86) Internationale Anmeldenummer: PCT/EP2018/059438
(87) Internationale Veröffentlichungsnummer: WO 2018/202401

(56) Entgegenhaltungen:
- DE-A1-102011 083 614
- DE-A1-102011 084 921
- DE-A1-102012 005 303
- DE-B4-102008 034 240

## Beschreibung

Die Erfindung betrifft ein Verfahren zum Betreiben einer Druckregelanlage mit einem mehrstufigen Kompressor, insbesondere in einem Nutzfahrzeug, sowie eine Druckregelanlage mit einem mehrstufigen Kompressor.

Mehrstufige Kompressoren dienen dazu, eine hohe Verdichtung eines Druckmittels, insbesondere eines Gases, beispielsweise Luft, dadurch zu erreichen, dass das in einer ersten Verdichtungsstufe vorverdichtete Druckmittel in einer darauffolgenden zweiten Verdichtungsstufe zusätzlich verdichtet wird. Es können auch weitere Verdichtungsstufen in einer Kaskade vorhanden sein, in denen jeweils das von der vorhergehenden Verdichtungsstufe verdichtete Druckmittel weiter verdichtet wird.

Sollen Verbraucher beispielsweise einer Luftfederanlage oder einer Niveauregelanlage in einem Fahrzeug mit dem Druckmittel versorgt werden, kann ein derartiger mehrstufiger Kompressor verwendet werden, um das Druckmittel mit einem entsprechenden Druck zum Versorgen von Druckfedern bereitzustellen. Der mehrstufige Kompressor verdichtet dabei das in einen Ansaugraum eingeleitete Druckmittel aus der Atmosphäre über zwei oder mehrere Verdichtungsstufen und überführt das mehrstufig verdichtete Druckmittel an die Druckfedern. Alternativ kann auch ein bereits verdichtetes Druckmittel aus einem Druckmittelvorrat verwendet werden, das durch den Kompressor ein weiteres Mal verdichtet wird.

Dies ist beispielsweise in DE 10 2008 034 240 B4, die den Oberbegriff des Anspruchs 1 bzw. 8 offenbart, beschrieben, wonach eine Niveauregelanlage vorgesehen ist, bei der ein mehrstufiger Kompressor verwendet wird, um das Druckmittel aus der Atmosphäre oder aus einem Druckmittelvorrat zu fördern, wobei zwei Verdichtungsstufen vorgesehen sind. Wird Druckmittel aus der Atmosphäre verdichtet, wird das Druckmittel durch beide Verdichtungsstufen geleitet, während bei einer Förderung des Druckmittels aus dem Druckmittelvorrat eine Verdichtung des dem Verbraucher zugeführten Druckmittels lediglich mit der zweiten Verdichtungsstufe stattfindet. Um in diesem Fall die Verdichtungsarbeit der ersten Verdichtungsstufe zu reduzieren oder zu sperren, ist ein als 2/2-Wegeventil ausgeführtes Sperrventil vorgesehen, das bei einer Förderung aus dem Druckmittelvorrat eine Förderung von verdichtetem Druckmittel aus der ersten Verdichtungsstufe zur zweiten Verdichtungsstufe verhindert. Das Sperrventil wird hierbei elektrisch über eine Steuereinrichtung angesteuert.

Die DE 103 21 771 A1 beschreibt einen mehrstufigen Kompressor, bei dem zur Abschaltung der ersten Verdichtungsstufe eine Bypassleitung mit einem pneumatisch steuerbaren Sperrventil vorgesehen ist, die einen Ansaugraum des Kompressors mit dem ersten Verdichtungsraum verbindet. Das pneumatische Sperrventil wird hierbei in Abhängigkeit des Druckes im Ansaugraum geöffnet, so dass ein Druckausgleich zwischen dem Ansaugraum und dem Verdichtungsraum stattfinden kann. Dies dient dazu, die erste Verdichtungsstufe in Abhängigkeit des Druckes des in den Ansaugraum eingelassenen Druckmittels abzuschalten. Dadurch kann in Abhängigkeit des eingelassenen Druckmittels im einstufigen Betrieb eine hohe Verdichtung bei einem geringen Volumenstrom erreicht werden. Im zweistufigen Betrieb hingegen wird ein hoher Volumenstrom erreicht und das Druckmittel durchströmt zwei Verdichtungsstufen.

Gemäß DE 10 2011 083 614 A1 ist vorgesehen, in einem offenen Betriebsmodus Luft durch zwei Verdichtungsstufen zu verdichten und die verdichtete Luft einem Druckmittelvorrat zuzuführen. In einem geschlossenen Betriebsmodus kann die bereits verdichtete Luft aus dem Druckmittelvorrat in ein Zwischenvolumen zwischen der ersten und der zweiten Verdichtungsstufe eingelassen und durch eine der Verdichtungsstufen erneut verdichtet werden, um anschließend in die Verbraucher zu gelangen. Weiterhin ist auch eine Rückführung von Luft aus den Verbrauchern in den Druckmittelvorrat vorgesehen. Zum Steuern sind elektrisch betätigte Umschaltventile vorgesehen, die entsprechend die Strömungswege für die verdichtete oder die zu verdichtende Luft sperren und freigeben.

DE 10 2012 010 390 A1 beschreibt ein Niveauregelsystem, bei dem in einem geschlossenen Betriebsmodus über einen Kompressor bereits verdichtete Luft aus einem Druckvorratsbehälter in als Federbeine ausgeführte Verbraucher zugeführt wird. Zum Steuern des Druckes im Niveauregelsystem ist eine Druckbegrenzungsfunktion vorgesehen, die entweder in Form eines Ablassventils oder in Form eines Vorsteuerventils ausgestaltet ist, die jeweils bei einem zu hohen Druck im System Luft in die Atmosphäre ablassen.

Die DE102011084921A1 betrifft eine Kompressorschaltung für eine pneumatische Regelvorrichtung eines Fahrzeugs, umfassend einen Kompressor und einen Druckregler. Der Druckregler ist zwischen einer Eingangsseite des Kompressors und der pneumatischen Regelvorrichtung angeordnet, wobei der Druckregler dazu ausgebildet ist, einen an seiner der pneumatischen Regelvorrichtung zugewandten Seite anliegenden Vordruck von Luft der pneumatischen Regelvorrichtung zu messen und diese Luft mit einem Eingangsdruck der Eingangsseite des Kompressors zuzuführen, wobei der Druckregler dazu ausgebildet ist, den Eingangsdruck des Kompressors in Abhängigkeit von der Messung zu regeln.

Die DE102011083614A1 betrifft eine Trocknerschaltung für eine pneumatische Regelvorrichtung eines Fahrzeugs umfassend - einen Lufttrockner, - einen ersten Verdichter, wobei der erste Verdichter dazu ausgebildet ist, in der pneumatischen Regelvorrichtung vorhandene Systemluft zu verdichten, wobei der Lufttrockner, der erste Verdichter und an den ersten Verdichter anschließbare Subsysteme der pneumatischen Regelvorrichtung so angeordnet sind, dass im Betriebsmodus einer geschlossenen Luftversorgung zwischen den Komponenten eines der Subsysteme unter Verwendung des ersten Verdichters beförderte Luft unter Umgehung des Lufttrockners befördert wird.

Die DE102012005303A1 betrifft eine Druckluftversorgungsanlage zum Betreiben einer Pneumatikanlage, insbesondere einer Luftfederanlage eines Fahrzeugs, aufweisend: eine Druckluftzuführung, einen Druckluftanschluss zur Pneumatikanlage, einen Entlüftungsanschluss zur Umgebung, eine pneumatische Hauptleitung zwischen der Druckluftzuführung und dem Druckluftanschluss, die einen Lufttrockner und eine erste Drossel aufweist, eine Entlüftungsleitung zwischen dem Druckluftanschluss und dem Entlüftungsanschluss, die eine zweite Drossel aufweist. Die Nennweite der ersten Drossel und die Nennweite der zweiten Drossel für die Entlüftung der Druckluftversorgungsanlage sind druckabhängig einstellbar.

Es ist Aufgabe der Erfindung, ein Verfahren zum Betreiben einer Druckregelanlage mit einem mehrstufigen Kompressors anzugeben, das in einfacher und zuverlässiger Weise eine Verdichtungsleistung sowie einen verdichteten Volumenstrom des mehrstufigen Kompressors auf die Betriebsmodi der Druckregelanlage abstimmt. Weiterhin ist es Aufgabe der Erfindung, eine Druckregelanlage mit einem mehrstufigen Kompressor bereitzustellen.

Diese Aufgabe wird durch ein Verfahren nach Anspruch 1 sowie eine Druckregelanlage nach Anspruch 8 gelöst. Die Unteransprüche geben vorteilhafte Weiterbildungen an.

Erfindungsgemäß ist demnach vorgesehen, dass eine Verdichtungsleistung einer ersten Verdichtungsstufe eines mehrstufigen Kompressors, insbesondere in einem geschlossenen Betriebsmodus einer Druckregelanlage, insbesondere einer Luftfederanlage in einem Fahrzeug, durch ein pneumatisch gesteuertes Sperrventil in Abhängigkeit eines auf einer Steuerleitung vorherrschenden Steuerdruckes reduziert bzw. beschränkt - insbesondere auf ein Minimum beschränkt - wird. Die Reduzierung bzw. die Beschränkung der Verdichtungsleistung erfolgt erfindungsgemäß durch eine vom Sperrventil gesteuerte Druckbegrenzung und/oder Volumenstrombegrenzung eines durch die erste Verdichtungsstufe geförderten vorverdichteten Druckmittels, indem das Sperrventil eine Zufuhr von zu verdichtendem Druckmittel, insbesondere Ansaugluft aus einer Atmosphäre oder Druckmittel aus einer vorgelagerten Verdichtungsstufe, in die erste Verdichtungsstufe - vorzugsweise vollständig - verhindert.

Unter Druckbegrenzung wird hierbei verstanden, dass der Atmosphärendruck bzw. der Druck des Druckmittels aus der vorgelagerten Verdichtungsstufe auf einen Grenz-Druck reduziert wird und dieser Grenz-Druck somit nicht überschritten wird, um die erfindungsgemäße Anpassung der Verdichtungsleistung zu erreichen.

Bei einer maximalen Beschränkung der Druckbegrenzung auf 0 bar absolut bzw. einer Durchflussrate von null aus der ersten Verdichtungsstufe, d. h. wenn der ersten Verdichtungsstufe kein zu verdichtendes Druckmittel mehr zugeführt wird und diese somit auch kein vorverdichtetes Druckmittel mehr fördert, wird die erste Verdichtungsstufe pneumatisch vollständig abgeschaltet; die erste Verdichtungsstufe trägt somit zu einer Gesamt-Verdichtungsleistung des mehrstufigen Kompressors insbesondere im geschlossenen Betriebsmodus nicht mehr bei, so dass der Anteil der ersten Verdichtungsstufe am Energieverbrauch des mehrstufigen Kompressors lediglich auf Reibungsverluste sowie die Verdichtung des nach dem Schließen des Sperrventils in der ersten Verdichtungsstufe verbliebenen Druckmittels minimiert wird.

Dadurch kann bereits der Vorteil erreicht werden, dass die Verdichtungsleistung der ersten Verdichtungsstufe insbesondere bei einem Umschalten in den geschlossenen Betriebsmodus der Druckregelanlage, die mit dem mehrstufigen Kompressor betrieben wird, in einfacher und zuverlässiger Weise selbstregulierend bzw. automatisch angepasst werden kann. Da eine pneumatische Ansteuerung des Sperrventils erfolgt, sind keine weiteren Elektroniken nötig, die das Umschalten bewirken.

Als erste Verdichtungsstufe ist hierbei nicht zwangsläufig die im mehrstufigen Kompressor in Strömungsrichtung am Anfang liegende Verdichtungsstufe gemeint. Vielmehr wird darunter verstanden, dass die erste Verdichtungsstufe irgendeine Verdichtungsstufe im mehrstufigen Kompressor sein kann, auf die mindestens eine weitere Verdichtungsstufe - eine zweite Verdichtungsstufe - folgt, wobei diese nicht zwangsläufig an die erste Verdichtungsstufe im Sinne der Erfindung angrenzt. Die zweite Verdichtungsstufe ist somit dadurch definiert, dass sie in Strömungsrichtung irgendwo hinter der ersten Verdichtungsstufe liegt, wobei die zweite Verdichtungsstufe dabei nicht zwangsläufig als die letzte Verdichtungsstufe des mehrstufigen Kompressors anzusehen ist.

In einem offenen Betriebsmodus der Druckregelanlage wird von dem mehrstufigen Kompressor Druckmittel, beispielsweise über eine Ansaugleitung bereitgestellte Ansaugluft aus der Atmosphäre, von der ersten Verdichtungsstufe vorverdichtet, beispielsweise auf einen Zwischendruck von 5-6bar bei einem Stabilisierungsdruck der ersten Verdichtungsstufe von beispielsweise 10-15bar, und in ein Zwischenvolumen eingeleitet. Von dort gelangt die vorverdichtete Luft in eine zweite Verdichtungsstufe, in der sie weiter verdichtet wird, beispielsweise auf einen Enddruck von 20bar, und aus der sie über einen Lufttrockner in ein oder mehrere Verbraucher, beispielsweise Luftfedern der Druckregelanlage, und/oder in einen Druckmittelvorrat gelangt. Somit wird die Gesamt-Verdichtungsleistung im offenen Betriebsmodus durch beide Verdichtungsstufen bestimmt.

Der geschlossene Betriebsmodus wird insbesondere dann eingestellt, wenn eine Versorgung der Verbraucher der Druckregelanlage mit hoch-verdichtetem und/oder getrocknetem Druckmittel erfolgen soll. Dies ist insbesondere dann der Fall, wenn eine schnelle Druckbeaufschlagung der Verbraucher gewünscht ist, beispielsweise dann, wenn eine schnelle Regelung durch Bereitstellung eines hohen End-Volumenstromes, d. h. einer hohen Luftmenge pro Zeit aus der zweiten bzw. letzten Verdichtungsstufe, durch die Luftfederregelung erforderlich ist. Außerdem kann der geschlossene Betriebsmodus eingestellt werden, wenn eine Rückförderung von Druckmittel aus den Verbrauchern in den Druckmittelvorrat erfolgen soll, da auch dann eine erneute Verdichtung zu gewährleisten ist.

Zum Umschalten von dem offenen Betriebsmodus in den geschlossenen Betriebsmodus wird beispielsweise ein Schaltventil, das den Druckmittelvorrat oder die Verbraucher mit der Speicherleitung verbindet, geöffnet, so dass bereits verdichtetes Druckmittel, im Folgenden Aufladedruckmittel genannt, in die Speicherleitung einströmen kann. Das Aufladedruckmittel kann zum einen das im Druckmittelvorrat gespeicherte Druckmittel, das bereits auf einen Vorratsdruck verdichtet wurde, sein. Soll im geschlossenen Betriebsmodus hingegen eine Rückförderung von bereits verdichtetem Druckmittel aus den Verbrauchern in den Druckmittelvorrat erfolgen, so ist das Druckmittel aus den Verbrauchern das Aufladedruckmittel, das in die Speicherleitung eingelassen wird. Dazu können für die Verbraucher und den Druckmittelvorrat zwei getrennte Schaltventile vorgesehen sein, die das Einströmen in die Speicherleitung steuern.

Über die Speicherleitung gelangt das Aufladedruckmittel erfindungsgemäß in das Zwischenvolumen zwischen der ersten und der zweiten Verdichtungsstufe und gleichzeitig beispielsweise über eine von der Speicherleitung abzweigende Steuerleitung zu einem Steuereingang des pneumatisch gesteuerten Sperrventils. Im Zwischenvolumen als auch am Steuereingang herrscht somit in etwa derselbe Druck, der etwas tiefer ist als der Vorratsdruck im Druckmittelvorrat oder dem Druck in den Verbrauchern, da die Drücke durch das Durchströmen des Schaltventils sowie der Speicherleitung abfallen. Im geschlossenen Betriebsmodus kann somit durch die zweite Verdichtungsstufe das bereits hochverdichtete Aufladedruckmittel zusätzlich verdichtet werden.

Ein Speicher-Volumenstrom des in die Speicherleitung eingelassenen, bereits verdichteten Aufladedruckmittels, d. h. eine Luftmenge pro Zeit in das Zwischenvolumen, ist hierbei insbesondere abhängig von einer Nennweite des Schaltventils und ggf. weiterer vorgeschalteter Ventile, durch die das Aufladedruckmittel strömt. Der Speicher-Volumenstrom bestimmt wiederum auch den End-Volumenstrom des durch die zweite Verdichtungsstufe geförderten Druckmittels. Durch die Energieeinsparung in der ersten Verdichtungsstufe können beide Volumenströme höher ausgelegt werden:
Dadurch, dass die Verdichtungsleistung und somit auch der Energieverbrauch eines Motors des mehrstufigen Kompressors der ersten Verdichtungsstufe im geschlossenen Betriebsmodus reduziert werden, kann dieser Energieübertrag bis zu einer akzeptierbaren maximalen Energiebegrenzung, insbesondere einer Strombegrenzung von beispielsweise 35 A, zum Betreiben der zweiten Verdichtungsstufe zusätzlich verwendet werden. Dazu kann beispielsweise die Nennweite des Schaltventils und somit der Speicher-Volumenstrom höher ausgelegt werden, ohne die akzeptierbare maximale Energiebegrenzung zu übersteigen. Folglich erhöht sich eine Wirkleistung des Druckregelsystems, da bei gleicher akzeptierbarer elektrischer Leistung ein deutlich erhöhter End-Volumenstrom durch die zweite Verdichtungsstufe bei gleichem Energieeinsatz gewährleistet werden kann.

Sobald im geschlossenen Betriebsmodus das Aufladedruckmittel in das Zwischenvolumen eingelassen wird, stellt die erste Verdichtungsstufe ein vorverdichtetes Druckmittel bereit, das bis auf den dann im Zwischenvolumen vorherrschenden Aufladedruck des Aufladedruckmittels verdichtet ist. Dies wird erfindungsgemäß durch das Freigeben des Aufladedruckmittels automatisch verhindert, da über die Steuerleitung auch das Sperrventil angesteuert wird. Dieses schaltet dann je nach Steuerdruck sofort um und bewirkt eine Reduzierung bzw. Abschaltung der Verdichtungsleistung der ersten Verdichtungsstufe. Im bevorzugten Fall wird die Verdichtungsleistung der ersten Verdichtungsstufe vollständig abgeschaltet, d. h. die Verdichtungsleistung der ersten Verdichtungsstufe wird auf den Wert Null beschränkt.

Wird die Verdichtungsleistung der ersten Verdichtungsstufe im geschlossenen Betriebsmodus nicht vollständig abgeschaltet sondern lediglich reduziert, befindet sich im Zwischenvolumen eine Mischung aus dem von der ersten Verdichtungsstufe vorverdichteten Druckmittel sowie dem jeweiligen Aufladedruckmittel aus der Speicherleitung. Dadurch wird in dem Fall ein Mixdruckmittel mit einem Mix-Volumenstrom sowie einem Mixdruck, die sich aus den jeweiligen Volumenströmen bzw. Drücken zusammensetzen, aus dem Zwischenvolumen in die zweite Verdichtungsstufe gefördert.

Beim Einstellen des geschlossenen Betriebsmodus wird das Sperrventil in Abhängigkeit des Steuerdruckes vorzugsweise vollständig geschlossen, wobei das Sperrventil in der Ansaugleitung angeordnet ist, so dass das Schließen des Sperrventils verhindert, dass die Ansaugluft in die erste Verdichtungsstufe einströmen kann. Somit steht der ersten Verdichtungsstufe vorzugsweise kein Druckmittel zur Verfügung, das vorverdichtet werden kann. Wird das Sperrventil im geschlossenen Betriebsmodus nicht vollständig in die geschlossene Stellung überführt, so wird nur ein geringer Teil der Ansaugluft zum Vorverdichten in die erste Verdichtungsstufe eingelassen.

Dadurch wird erfindungsgemäß bewirkt, dass im geschlossenen Betriebsmodus aus der ersten Verdichtungsstufe kein oder nur ein geringer Anteil des Druckmittels in das Zwischenvolumen gefördert wird. Im offenen Betriebsmodus hingegen liegt kein Steuerdruck am Sperrventil an, so dass das Sperrventil geöffnet bleibt und die Ansaugluft vollständig in die erste Verdichtungsstufe und vorverdichtet in das Zwischenvolumen gefördert wird. Vorteilhafterweise ist ein Querschnitt des Sperrventils dabei vergleichbar zu einem Leitungsquerschnitt der Ansaugleitung gewählt, so dass im geöffneten Zustand des Sperrventils, d. h. im offenen Betriebsmodus, durch das zusätzliche Sperrventil der Betrieb der Druckregelanlage nicht beeinflusst wird.

Das vom Sperrventil gesteuerte vollständige oder teilweise Abtrennen der Ansaugleitung von der ersten Verdichtungsstufe sorgt dafür, dass im Gegensatz zum offenen Betriebsmodus kein bzw. nur ein geringer Teil der Ansaugluft durch die erste Verdichtungsstufe vorverdichtet und in das Zwischenvolumen gefördert wird. Dadurch trägt die erste Verdichtungsstufe nicht mehr bzw. nur anteilig zur Gesamt-Verdichtungsleistung des Kompressors bei.

Der Hauptteil der Gesamt-Verdichtungsleistung im geschlossenen Betriebsmodus wird also durch eine Verdichtung des aus der Speicherleitung in das Zwischenvolumen eingelassenen und nicht durch die erste Verdichtungsstufe geförderten Aufladedruckmittels erreicht. Ein Einströmen des Aufladedruckmittels aus dem Zwischenvolumen in die erste Verdichtungsstufe wird durch ein erstes Auslassventil in der ersten Verdichtungsstufe, beispielsweise ein zum Zwischenvolumen öffnendes Rückschlagventil, verhindert. Somit findet kein Druckausgleich zwischen dem Zwischenvolumen und dem ersten Verdichtungsraum der ersten Verdichtungsstufe statt.

Dadurch wird vorteilhafterweise automatisch die Verdichtungsleistung der ersten Verdichtungsstufe im geschlossenen Betriebsmodus beschränkt, da die erste Verdichtungsstufe das Druckmittel nicht auf den im Zwischenvolumen vorherrschenden Zwischendruck des Aufladedruckmittels verdichtet. Die Leistungsaufnahme der ersten Verdichtungsstufe kann somit begrenzt werden, wobei sich diese Leistungsaufnahme bei einem vollständigen Abschalten der ersten Verdichtungsstufe im Wesentlichen auf die Reibungsverluste sowie die Verdichtung des nach dem Schließen des Sperrventils in der Ansaugleitung verbliebenen Druckmittels beschränkt. Die Antriebsleistung eines Motors des Kompressors wird somit verringert, der Energiebedarf sinkt und kann somit im geschlossenen Betriebsmodus hauptsächlich auf den Betrieb der zweiten bzw. weiterer Verdichtungsstufen und somit des End-Volumenstromes abgestimmt werden. Zudem kann den Verbrauchern oder dem Druckmittelvorrat ein Druckmittel zugeführt werden, das eine hohe Trocknungsstufe erreicht hat, da der Anteil an nicht-getrocknetem Druckmittel, das im Wesentlichen aus der ersten Verdichtungsstufe und damit aus der Atmosphäre gefördert wird, reduziert ist.

Dadurch, dass die erfindungsgemäße Ansteuerung des Sperrventils pneumatisch erfolgt und dabei unmittelbar an die Freigabe des Aufladedruckmittels aus dem Druckmittelvorrat oder den Verbrauchern in das Zwischenvolumen gekoppelt ist, erfolgt die Umschaltung ohne zusätzlichen Aufwand und Zeitverluste. Da das Aufladedruckmittel nicht durch die erste Verdichtungsstufe in den mehrstufigen Kompressor eingeleitet wird, kann ein einfacher Aufbau sowie Betrieb der Druckregelanlage erreicht werden, da das unverdichtete Druckmittel im offenen Betriebsmodus und das Aufladedruckmittel im geschlossenen Betriebsmodus an unterschiedlichen Stellen in den mehrstufigen Kompressor eingeleitet werden und somit kein Umschalten der Druckmittelquelle der ersten Verdichtungsstufe nötig ist.

Um ein ungewolltes Schließen des Sperrventils im offenen Betriebsmodus zu vermeiden, ist gemäß einer ersten Ausführungsform vorgesehen, einen Schließdruck des Sperrventils über den maximal benötigten Verdichtungsdruck der ersten Verdichtungsstufe und somit an einen durch die erste Verdichtungsstufe maximal zu erreichenden Zwischendruck unter Berücksichtigung eines minimal möglichen Aufladedruckes des Aufladedruckmittels anzupassen. Durch die entsprechende Einstellung des Schließdruckes wird somit für den offenen Betriebsmodus eine Sperrfunktion ausgebildet, durch die ein Schalten des Sperrventils durch das von der ersten Verdichtungsstufe vorverdichtete Druckmittel verhindert wird. Die Druckregelanlage bzw. der mehrstufige Kompressor ist in dem Fall an den Schließdruck in entsprechender Weise anzupassen, so dass dieser im offenen Betriebsmodus durch die erste Verdichtungsstufe nicht erreicht wird. Beträgt beispielsweise der maximal zulässige Enddruck des Druckregelsystems 20bar, wird ein maximaler Zwischendruck von ca. 4,5bar erreicht, so dass ein Schließdruck des Sperrventils von beispielsweise 5bar eingestellt werden kann, der in etwa auch dem minimalen Aufladedruck des Aufladedruckmittels entspricht.

In diesem Fall bleibt das Sperrventil im offenen Betriebsmodus bei einem Zwischendruck von 4,5 bar geöffnet und der mehrstufige Kompressor fördert verdichtetes Druckmittel aus der zweiten Verdichtungsstufe mit einem Enddruck von ca. 20bar. Im geschlossenen Betriebsmodus steigt der Zwischendruck und somit auch der Steuerdruck am Sperrventil auf über 5bar, das Sperrventil schließt, die Verdichtungsleistung der ersten Verdichtungsstufe wird reduziert und durch die erneute Verdichtung des Aufladedruckmittels ist durch die zweite Verdichtungsstufe ein hoher Enddruck erreichbar, der den Verbrauchern oder dem Druckmittelvorrat zugeführt werden kann. Somit kann in einfacher Weise ein ungewolltes Schließen des Sperrventils im offenen Betriebsmodus ohne zusätzliche Bauteile erreicht werden, indem lediglich eine entsprechende Anpassung von Parametern der Druckregelanlage stattfindet.

Gemäß einer alternativen Ausführungsform ist zum Ausbilden der Sperrfunktion zwischen der Steuerleitung und dem Zwischenvolumen ein Zusatzventil vorgesehen, das beispielsweise als ein Überdruckventil, insbesondere als Rückschlagventil, oder als pneumatisches Steuerventil ausgebildet sein kann. Das Zusatzventil sperrt den Durchgang von der ersten Verdichtungsstufe vorverdichtetem Druckmittel aus dem Zwischenvolumen in Richtung des Sperrventils. Dadurch kann in einfacher Weise eine alternative Sperrwirkung der ersten Verdichtungsstufe im offenen Betriebsmodus vermieden werden, wobei die erste Verdichtungsstufe durch das Vorsehen eines zusätzlichen Ventils auch Druckmittel mit einem höheren Zwischendruck fördern kann als der Schließdruck des Sperrventils. Somit ist eine Anpassung der Parameter der Druckregelanlage nicht zwingend erforderlich.

Das Sperrventil kann als pneumatisch betätigtes 2/2-Wegeventil mit einer Feder ausgeführt sein, wobei die Feder das Wegeventil in seine geöffnete Stellung überführt sobald der Steuerdruck unter einen Schließdruck von beispielsweise 5 bar abfällt. Falls als Zusatzventil beispielsweise ein Überdruckventil vorgesehen ist, um im offenen Betriebsmodus ein unbeabsichtigtes Schließen des Sperrventils zu vermeiden, kann der Schließdruck auch weniger als 5bar betragen, da die Steuerleitung außer im geschlossenen Betriebsmodus drucklos ist. Ist der Steuerdruck größer als der Schließdruck, ist das Sperrventil teilweise oder vollständig geschlossen. In seiner geschlossenen Stellung verhindert das Sperrventil ein Einströmen von Ansaugluft durch die Ansaugleitung in Richtung der ersten Verdichtungsstufe. In seiner teilweise geschlossenen Stellung wird in Abhängigkeit eines Ventilquerschnittes des Sperrventils lediglich ein Teil der Ansaugluft zur ersten Verdichtungsstufe geleitet. Vorteilhafterweise ist mit einem derartigen pneumatischen Sperrventil ein einfacher und kostengünstiger Aufbau realisierbar, mit dem sich der Wirkungsgrad des Kompressors optimal abstimmen lässt, d. h. ein hoher Speicher-Volumenstrom durch Vergrößerung der Nennweite insbesondere des Schaltventils bei einem gleichzeitig festlegbaren maximalen Energieverbrauch und einem getrocknetem Druckmittel. Ohne diese Auslegung würde die Energie im System erhöht werden und zusätzlich ein nicht nachvollziehbarer Trocknungsgehalt des Systems entstehen. Wird nur der rein geschlossene Betrieb durch Komplettabschaltung der ersten Verdichtungsstufe erreicht, entsteht eine eindeutige physikalische Regelung in Bezug auf Trocknungsgehalt und Energieverbrauch, sowie Energieerhalt des Systems. Gemäß einer alternativen Ausbildung kann auch ein pneumatisch gesteuertes Proportionalitätsventil als Sperrventil verwendet werden. Dieses schließt je nach Höhe des anliegenden Steuerdrucks kontinuierlich oder stufenweise ab dem Schließdruck, so dass die Verdichtungsleistung der ersten Verdichtungsstufe variabel abgestimmt werden kann. Somit wird die Ansaugluft in einer vom Steuerdruck abhängigen Zwischenstellung des Sperrventils lediglich anteilig zur ersten Verdichtungsstufe geleitet, wobei der Anteil abhängig vom anliegenden Steuerdruck ist. Dieser Anteil wird der ersten Verdichtungsstufe zugeführt, in der er vorverdichtet in das Zwischenvolumen gelangt.

Dadurch kann vorteilhafterweise eine variable Reduzierung der Verdichtungsleistung der ersten Verdichtungsstufe erreicht werden, die abhängig vom Aufladedruck des Aufladedruckmittels ist. Liegt beispielsweise ein Aufladedruckmittel mit einem hohen Aufladedruck vor, d. h. einer hohen Verdichtung, kann die Verdichtungsleistung der ersten Verdichtungsstufe im geschlossenen Betriebsmodus stärker reduziert oder gar abgeschaltet werden und bei niedrigem Aufladedruck kann unterstützend eine höhere Verdichtungsleistung durch die erste Verdichtungsstufe eingestellt werden. Dadurch kann in beiden Fällen die Gesamt-Verdichtungsleistung und der Wirkungsgrad des Kompressors optimal an die tatsächlich vorherrschenden Bedingungen angepasst werden, indem die Druckbegrenzung und/oder die Volumenstrombegrenzung entsprechend über das Sperrventil eingestellt wird.

Insbesondere kann dies in Abhängigkeit des vorgegebenen Energieverbrauches, d. h. einer oberen Energiebegrenzung, geschehen. Das pneumatische Sperrventil wird dann derartig ausgelegt, dass die erste Verdichtungsstufe so lange für eine Verdichtung hinzugezogen wird, bis eine festgelegte obere Energiebegrenzung für den Kompressor erreicht ist. Wird die obere Strombegrenzung überschritten, schaltet das Sperrventil automatisch um, so dass die Leistungsaufnahme der ersten Verdichtungsstufe verringert wird und der Stromverbrauch wieder innerhalb der Grenzwerte liegt. Dadurch kann der durch die zweite Verdichtungsstufe bereitgestellte End-Volumenstrom und die Gesamt-Verdichtungsleistung bei gleichzeitiger Einhaltung der Energievorgaben im geschlossenen Betriebsmodus optimal aufeinander abgestimmt werden. Diese Abstimmung ist sowohl für ein pneumatisches Wegeventil als auch für ein Proportionalitätsventil möglich.

Der optimale Betrieb der Druckregelanlage wird somit für den geschlossenen Betriebsmodus durch eine optimal ausgelegte zweite Verdichtungsstufe erreicht, die durch den maximalen Speicher-Volumenstrom, der insbesondere durch die Nennweite des Schaltventils definiert wird, sowie der abgeschalteten bzw. reduzierten ersten Verdichtungsstufe an die Leistungsgrenze des mehrstufigen Kompressors oder der oberen Energiegrenze befüllt wird. Ergänzend kann zur Sicherheit auch ein zusätzliches Druckbegrenzungsventil in der Speicherleitung vorgesehen sein, das einen maximalen Aufladedruck in der Speicherleitung festlegt, wobei der maximale Aufladedruck in Abhängigkeit der maximalen Energiebegrenzung gewählt werden kann, so dass die zweite Verdichtungsstufe nicht über ihrer Leistungsgrenze bzw. der Leistungsgrenze ihres Antriebs betrieben wird. Ergänzend kann auch der Aufbau der zweiten Verdichtungsstufe des mehrstufigen Kompressors angepasst werden, indem beispielsweise ein Kolben, der für die Verdichtung in der zweiten Verdichtungsstufe sorgt, größer ausgelegt wird.

Ergänzend kann als Sperrventil auch ein 3/2 Wegeventil bzw. 3/2 Proportionalitätsventil vorgesehen sein, so dass vorteilhafterweise auch im offenen Betriebsmodus eine Entlüftung der Speicherleitung möglich ist.

Erfindungsgemäß ist der mehrstufige Kompressor als ein Kolbenkompressor ausgeführt, wobei durch einen ersten Kolben eine erste Verdichtungsstufe ausgebildet wird und durch einen zweiten Kolben die zweite Verdichtungsstufe, die durch das Zwischenvolumen miteinander verbunden sind, wobei auch weitere Verdichtungsstufen mit weiteren Kolben vorhanden sein können. Alle Kolben werden von einem Motor über einen Kolbenantrieb bewegt, um nacheinander das Druckmittel in dem entsprechenden Verdichtungsraum zu verdichten. Die Verdichtungsstufen weisen unterschiedliche Verdichtungsvolumen auf, um durch die erste Verdichtungsstufe eine Vorverdichtung und durch die zweite Verdichtungsstufe eine zusätzliche Verdichtung und durch ggf. weitere Verdichtungsstufe eine weitere Verdichtung erreichen zu können. Der Kolbenkompressor ist Teil einer Druckregelanlage, die über eine Verdichtung von Luft als Druckmittel mehrere Federn mit Druckluft versorgt, um beispielsweise eine Federung oder ein Heben und Senken eines Teils des Fahrzeuges zu erreichen, wobei dies in einem geschlossenen oder einem geöffneten Betriebsmodus stattfinden kann.

Vorteilhafterweise können das Sperrventil und die dazugehörigen Übertragungsleitungen zur pneumatischen und selbstregulierenden Abstimmung des Kompressors im geschlossenen Betriebsmodus platzsparend in einem Kompressorgehäuse, beispielsweise in einem Kompressordeckel, eingebaut werden. Dadurch können Platz und Gewicht gespart werden und zudem ein einfacher Aufbau mit geringen pneumatischen Übertragungswegen erreicht werden. Zudem ist vorteilhafterweise eine einfache Nachrüstbarkeit der zusätzlichen pneumatischen Komponenten in einem üblichen mehrstufigen Kompressor möglich.

Die Erfindung wird im Folgenden anhand der beiliegenden Zeichnungen näher erläutert. Es zeigen:
- Fig. 1a, b, c: eine Luftfederanlage mit einem zweistufigen Kompressor in unterschiedlichen Ausführungsformen;
- Fig. 2: einen zweistufiger Kompressor mit einem integrierten druckgesteuerten Sperrventil gemäß einer ersten Ausführungsform; und
- Fig. 3: ein Flussdiagramm zur Durchführung des erfindungsgemäßen Verfahrens.

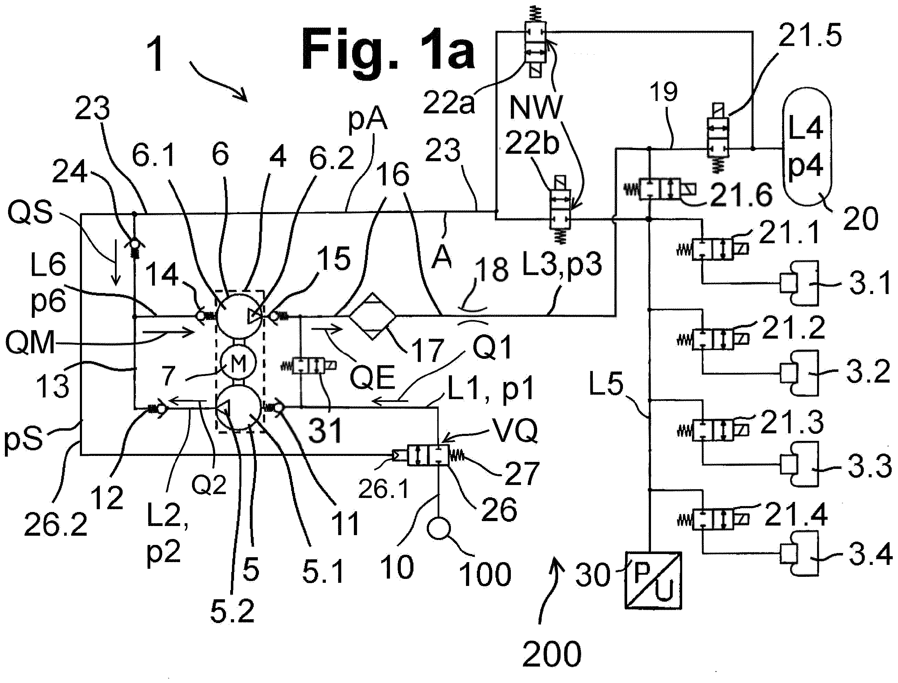

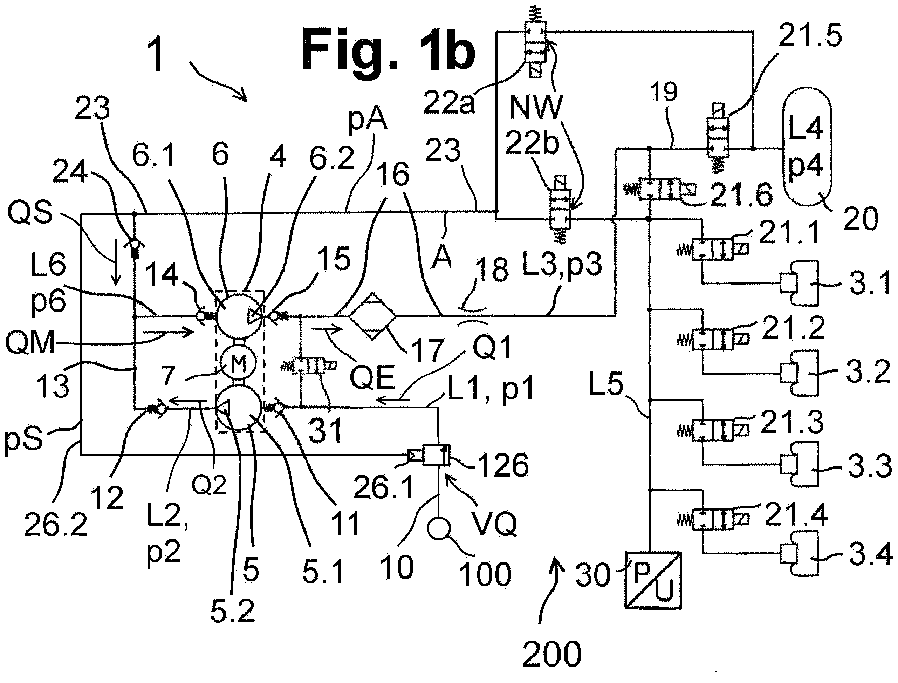

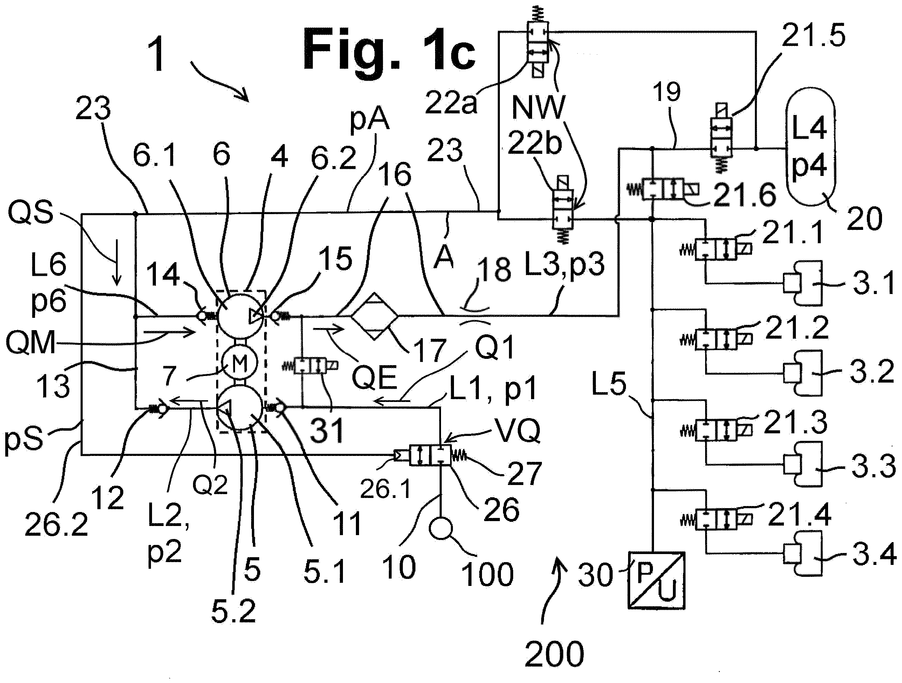

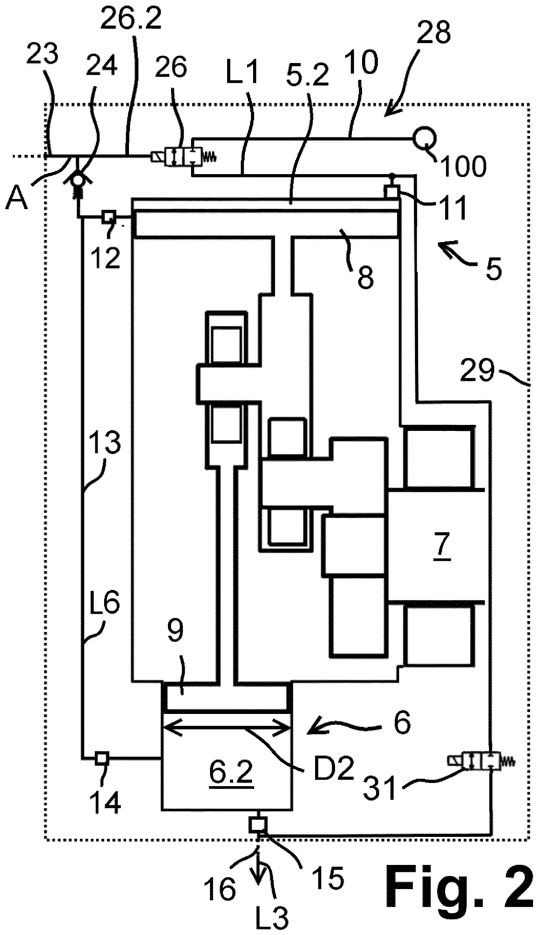

Gemäß Figur 1a, b, c ist jeweils eine Druckregelanlage, beispielsweise eine Luftfederanlage 1 vorgesehen, die vier Druckmittelkammern 3.1, 3.2, 3.3, 3.4 aufweist, die jeweils einem Verbraucher, beispielsweise Luftfedern eines Fahrzeuges 200, zugeordnet sind. Die Druckmittelkammern 3.i werden mit einem verdichteten Druckmittel L3, beispielsweise Luft, versorgt, wobei das verdichtete Druckmittel L3 in einem zweistufigen Kompressor 4, beispielsweise einem in Fig. 2 dargestellten Kolbenkompressor verdichtet wird.

Der zweistufige Kompressor 4 weist dazu eine erste Verdichtungsstufe 5 sowie eine zweite Verdichtungsstufe 6 auf, die jeweils einen Ansaugraum 5.1, 6.1 und einen Verdichtungsraum 5.2, 6.2 aufweisen, wobei das in den jeweiligen Ansaugraum 5.1, 6.1 einströmende Druckmittel L1, L6 in dem Verdichtungsraum 5.2, 6.2 verdichtet wird. Angetrieben werden die Verdichtungsstufen 5, 6 durch einen Motor 7, der bewirkt, dass sich ein in der jeweiligen Verdichtungsstufe 5, 6 befindlicher Kolben 8, 9 auf- und ab-bewegt und dadurch das im Ansaugraum 5.1, 6.1 bereitgestellte Druckmittel L1, L6 entsprechend verdichtet wird.

Die Druckregelanlage 1 kann gemäß dieser Ausführung in zwei Betriebsmodi betrieben werden, einem offenen Betriebsmodus BMo (open mode) und einem geschlossenen Betriebsmodus BMc (closed mode), in denen jeweils Luft als Druckmittel L1, L2, L3, L4, L5, L6 gefördert und verdichtet wird. Im offenen Betriebsmodus BMo wird Ansaugluft L1 aus der Atmosphäre 100, d. h. mit einem Luftdruck bzw. Ansaugdruck p1 von ca. 1 bar und einem Ansaug-Volumenstrom Q1, über eine Ansaugleitung 10 sowie ein erstes Einlassventil 11 in den ersten Ansaugraum 5.1 der ersten Verdichtungsstufe 5 eingeleitet. Anschließend wird die Ansaugluft L1 über den ersten Kolben 8 (s. Fig. 2) zunächst vorverdichtet und dabei in den ersten Verdichtungsraum 5.2 geleitet. Aus dem ersten Verdichtungsraum 5.2 strömt die vorverdichtete Luft L2 mit einem Zwischendruck p2 und einen Zwischen-Volumenstrom Q2 über ein erstes Auslassventil 12, beispielsweise ein Rückschlagventil, in ein Zwischenvolumen 13.

Aus dem Zwischenvolumen 13 gelangt die vorverdichtete Luft L2 über ein zweites Einlassventil 14 in den zweiten Ansaugraum 6.1 der zweiten Verdichtungsstufe 6, aus der die vorverdichtete Luft L2 über einen zweiten Kolben 9 (s. Fig. 2) weiter verdichtet wird und in den zweiten Verdichtungsraum 6.2 eingeleitet wird. Aus der zweiten Verdichtungsstufe 6 gelangt die verdichtete Luft L3 mit einem Enddruck p3 über ein zweites Auslassventil 15 in eine Auslassleitung 16 zu einem Lufttrockner 17 und einer Düse 18. Anschließend leitet die Auslassleitung 16 die verdichtete Luft L3 zu den Druckmittelkammern 3.1, 3.2, 3.3, 3.4 der angeschlossenen Verbraucher, beispielsweise der Luftfedern, sowie über eine Vorratsleitung 19 zu einem Druckmittelvorrat 20, in dem die verdichtete Luft L3 als gespeicherte Luft L4 mit einem Vorratsdruck p4, der aufgrund von Verlusten etwas geringer ist als der Enddruck p3, gespeichert wird.

Der Druckmittelvorrat 20 sowie die Druckmittelkammern 3.1, 3.2, 3.3, 3.4 sind jeweils durch ein steuerbares Ventil 21.1, 21.2, 21.3, 21.4, 21.5, 21.6 beispielsweise einem 2/2-Magnetventil, mit der Auslassleitung 16 bzw. der Vorratsleitung 19 verbindbar, so dass je nach Stellung der steuerbaren Ventile 21.i die verdichtete Luft L3 in die Druckmittelkammern 3.1, 3.2, 3.3, 3.4 zum Steuern der Verbraucher oder in den Druckmittelvorrat 20 strömen kann.

Demnach wird die verdichtete Luft L3 bei geöffnetem sechsten Ventil 21.6 sowie geöffnetem ersten Ventil 21.1 in die erste Druckmittelkammer 3.1, bei geöffnetem zweiten Ventil 21.2 in die zweite Druckmittelkammer 3.2, bei geöffnetem dritten Ventil 21.3 in die dritte Druckmittelkammer 3.3 und bei geöffnetem vierten Ventil 21.4 in die vierte Druckmittelkammer 3.4 geleitet, wobei dann das fünfte Ventil 21.5 geschlossen ist und somit keine verdichtete Luft L3 in den Druckmittelvorrat 20 strömen kann.

Befinden sich andererseits die Ventile 21.1, 21.2, 21.3, 21.4, 21.6 in der geschlossenen Stellung und das fünfte Ventil 21.5 ist geöffnet, kann durch den Lufttrockner 17 getrocknete und verdichtete Luft L3 in den Druckmittelvorrat 20 eingeleitet und darin gespeichert werden. Eine Drucküberwachung kann über ein Druckmessgerät 30 erfolgen. Über ein zusätzliches Ablassventil 31 kann die verdichtete Luft L3 in die Atmosphäre 100 abgelassen werden.

Die im Druckmittelvorrat 20 gespeicherte Luft L4 kann im geschlossenen Betriebsmodus BMc als Aufladedruckmittel A in das Zwischenvolumen 13 eingelassen werden, so dass die bereits verdichtete Luft L4 ein weiteres Mal verdichtet wird. Dazu wird gemäß dieser Ausführungsform das fünfte Ventil 21.5 geschlossen und ein erstes Schaltventil 22a geöffnet, das in einer zwischen dem fünften Ventil 21.5 und dem Druckmittelvorrat 20 abzweigenden Speicherleitung 23 angeordnet ist. Die Speicherleitung 23 ist gemäß der Ausführungsform in Fig. 1a und 1b über ein Zusatzventil 24, beispielsweise ein Absperrventil, insbesondere ein Rückschlagventil, oder ein pneumatisches Wegeventil, mit dem Zwischenvolumen 13 verbunden, so dass in der geöffneten Stellung des ersten Schaltventils 22a die gespeicherte Luft L4 in das Zwischenvolumen 13 sowie in den zweiten Ansaugraum 6.1 einströmen kann, um von der zweiten Verdichtungsstufe 6 erneut verdichtet zu werden. Ein Einströmen der gespeicherten Luft L4 in die erste Verdichtungsstufe 5 wird durch das erste Auslassventil 12 verhindert, das in dieser Richtung schließt.

Ist im geschlossenen Betriebsmodus BMc eine Rückführung von Kammerluft L5 aus den Druckmittelkammern 3.i in den Druckmittelvorrat 20 gewünscht, so wird das der jeweiligen Druckmittelkammer 3.i zugeordnete Ventil 21.i (mit i=1...4) sowie ein zweites Schaltventil 22b geöffnet und das sechste Ventil 21.6 geschlossen, so dass die Kammerluft L5 als Aufladedruckmittel A in die Speicherleitung 23 eingelassen wird. Das erste Schaltventil 22a ist in diesem Fall ebenfalls geschlossen und das fünfte Ventil 21.5 geöffnet, um ein Rückführen in den Druckmittelvorrat 20 zu ermöglichen. Ist lediglich eine Verdichtung von gespeicherter Luft L4 in der Druckregelanlage 1 vorgesehen, kann der Pfad über das zweite Schaltventil 22b auch entfallen.

Eine Nennweite NW der Schaltventile 22a, 22b wird hierbei beispielsweise zwischen 1mm und 4mm gewählt, so dass ein hoher Speicher-Volumenstrom QS in das Zwischenvolumen 13 eingestellt werden kann.

Da im geschlossenen Betriebsmodus BMc die erste Verdichtungsstufe 5 nicht zwingend benötigt wird zum Vorverdichten, da bereits ein (vor)verdichtete Aufladedruckmittel A über die Speicherleitung 23 in das Zwischenvolumen 13 eingeleitet wird, wird erfindungsgemäß die Verdichtungsleistung der ersten Verdichtungsstufe 5 beschränkt, insbesondere abgeschaltet, wobei darunter zu verstehen ist, dass von der ersten Verdichtungsstufe 5 keine oder im Vergleich zum offenen Betriebsmodus BMo weniger vorverdichtete Luft L2 in das Zwischenvolumen 13 gefördert wird. D.h. es wird eine Druckbegrenzung und/oder eine Volumenstrombegrenzung des in das Zwischenvolumen 13 geförderten vorverdichteten Druckmittels L2 auf einen durch ein Sperrventil 26 eingestellten Grenzdruck pG bzw. Grenz-Volumenstrom QG erreicht.

Dazu ist in der Ansaugleitung 10 ein Sperrventil 26 angeordnet, das einen pneumatischen Steuereingang 26.1 aufweist, der mit einer Steuerleitung 26.2 verbunden ist, wobei die Steuerleitung 26.2 gemäß dieser Ausführung von der Speicherleitung 23 abzweigt, so dass das Aufladedruckmittel A in die Steuerleitung 26.2 eingelassen wird und somit am Steuereingang 26.1 ein in der Steuerleitung 26.2 vorherrschender Aufladedruck pA des Aufladedruckmittels A anliegt. Das Sperrventil 26 wird in Abhängigkeit eines Steuerdruckes pS geschaltet, der bei geöffnetem ersten Schaltventil 22a oder zweiten Schaltventil 22b in etwa dem am Steuereingang 26.1 anliegenden Aufladedruck pA des jeweiligen Aufladedruckmittels A entspricht.

Sobald also das jeweilige Schaltventil 22a, 22b geöffnet wird, um den geschlossenen Betriebsmodus BMc zu aktivieren und die Luftfederanlage 1 mit der gespeicherten Luft L4 zu betreiben oder die Verbraucherluft L5 rückzufördern, wird automatisch über das Sperrventil 26 die Verdichtungsleistung der ersten Verdichtungsstufe 5 beschränkt oder abgeschaltet. Dazu schaltet der am Steuereingang 26.1 anliegende pneumatische Steuerdruck pS das Sperrventil 26 derartig um, dass dieses vorzugsweise vollständig schließt, so dass vorzugsweise keine Ansaugluft L1 in die erste Verdichtungsstufe 5 gelangt und somit von der ersten Verdichtungsstufe 5 lediglich das nach der Umschaltung des Sperrventils 26 noch in der ersten Verdichtungsstufe 5 verbleibende Druckmittel verdichtet wird. Im geschlossenen Betriebsmodus findet somit eine Verdichtung hauptsächlich - insbesondere ausschließlich - über die zweite Verdichtungsstufe 6 statt, um die Druckmittelkammern 3.i mit Luft zu versorgen oder eine Rückförderung in den Druckmittelvorrat 20 zu erreichen.

Das Sperrventil 26 ist gemäß einer ersten Ausführungsform als pneumatisches 2/2-Wegeventil mit einer Feder 27 ausgebildet. Demnach sperrt das pneumatische Steuerventil die Ansaugleitung 10, sobald ein festgelegter Steuerdruck pS überschritten wird, der gegen die Kraft der Feder 27 das Sperrventil 26 vollständig schließt, so wie in den Figuren 1a bis 1c dargestellt. Ist der Steuerdruck pS zu niedrig, insbesondere niedriger als ein Schließdruck pO des Sperrventils 26, öffnet das Sperrventil 26 vollständig, so dass die Ansaugluft L1 in die erste Verdichtungsstufe 5 gelangen kann. Im kraftlosen Zustand (idle mode), d.h. ohne einen anliegenden Steuerdruck pS, befindet sich das Sperrventil 26 durch die Federvorspannung 27 in seiner geöffneten Stellung.

Der Schließdruck pO kann hierbei derartig gewählt werden, dass das Zusatzventil 24, das im offenen Betriebsmodus BMo verhindert, dass das Sperrventil 26 durch das vorverdichtete Druckmittel L2 bereits schließt, entfallen kann, wie in der Ausführungsform in Fig. 1c gezeigt. Dazu ist der Schließdruck pO höher zu wählen als ein maximal erreichbarer Zwischendruck p2max, der durch die erste Verdichtungsstufe 5 zu erreichen ist. Weiterhin ist ein minimaler Aufladedruck pAmin des Aufladedruckmittels A zu berücksichtigen, so dass im offenen Betriebsmodus BMo ein unbeabsichtigtes Schließen des Sperrventils 26 und im geschlossenen Betriebsmodus BMc ein garantiertes Schließen des Sperrventils 26 und somit eine Leistungsreduktion gewährleistet werden kann. Die gesamte Luftfederanlage 1 bzw. der mehrstufige Kompressor 4 sind in dem Fall an diesen Schließdruck pO des Sperrventils 26 entsprechend anzupassen, so dass insbesondere der minimale Aufladedruck pAmin sowie der maximale Zwischendruck p2max entsprechend eingestellt werden.

Somit ist entweder durch den Schließdruck pO und/oder durch das Zusatzventil 24 eine Sperrfunktion ausbildbar, die jeweils verhindern, dass das durch die erste Verdichtungsstufe 5 vorverdichtete Druckmittel L2 das Sperrventil 26 im offenen Betriebsmodus BMo umschaltet.

Ist für die erste Verdichtungsstufe 5 im geschlossenen Betriebsmodus BMc lediglich eine Reduzierung der Verdichtungsleistung auf größer Null vorgesehen, d.h. von der ersten Verdichtungsstufe 5 wird ein vorverdichtetes Druckmittel L2 mit einem Zwischen-Volumenstrom Q2 in das Zwischenvolumen 13 eingeleitet, befindet sich im Zwischenvolumen 13 ein Mixdruckmittel L6, in dem anteilig das Aufladedruckmittel A sowie das vorverdichtete Druckmittel L2 vorhanden sind. Das Mixdruckmittel L6 wird mit einem Mixdruck p6 sowie einem Mix-Volumenstrom QM, die durch die jeweiligen Drücke pA, p2 bzw. Volumenströme QS, Q2 des Aufladedruckmittels A bzw. des vorverdichteten Druckmittels L2 gegeben sind, in die zweite Verdichtungsstufe 6 gefördert.

Ist die erste Verdichtungsstufe 5 im geschlossenen Betriebsmodus BMc jedoch vollständig abgeschaltet, wird aus dem Zwischenvolumen 13 lediglich das Aufladedruckmittel A mit dem Aufladedruck pA sowie dem Speicher-Volumenstrom QS in die zweite Verdichtungsstufe 6 eingeleitet. Das Mixdruckmittel L6 besteht somit ausschließlich aus dem Aufladedruckmittel A mit dem Aufladedruck pA ohne einen Anteil an vorverdichteter Luft L2 aus der ersten Verdichtungsstufe 5.

Im offenen Betriebsmodus BMo hingegen wird lediglich die vorverdichtete Luft L2 mit dem Zwischendruck p2 und dem Zwischen-Volumenstrom Q2 durch das Zwischenvolumen 13 in die zweite Verdichtungsstufe 6 gefördert, ohne dass es zu einer Mischung mit dem Aufladedruckmittel A kommt. Das Mixdruckmittel L6 besteht somit ausschließlich aus der vorverdichteten Luft L2 mit dem Zwischendruck p2 und dem Zwischen-Volumenstrom Q2.

Alternativ kann das Sperrventil 26 gemäß Fig. 1b auch als ein 2/2-Proportionalitätsventil 126 ausgebildet sein, das je nach anliegendem Steuerdruck pS sowie Ventilquerschnitt VQ an dem pneumatischen Steuereingang 26.1 nur einen Teil der Ansaugluft L1 in die erste Verdichtungsstufe 5 leitet - ohne Zusatzventil 24 erst dann, wenn der Schließdruck pO erreicht ist - und somit variabel eingestellt werden kann, wie stark die Verdichtungsleistung der ersten Verdichtungsstufe 5 im geschlossenen Betriebsmodus BMc beschränkt wird.

Dadurch kann im geschlossenen Betriebsmodus BMc eine Leistungsbegrenzung erreicht werden, mit der der Energiebedarf des Kompressors 4 variabel angepasst oder minimiert werden kann, da eine Vorverdichtung der Ansaugluft L1 auf den in diesem Fall im Zwischenvolumen 13 vorherrschenden Aufladedruck pA verhindert wird. Die benötigte Leistungsaufnahme des Motors 7 des Kompressors 4 wird somit begrenzt, da der erste Kolben 8 weniger Verdichtungsarbeit zu verrichten hat. Dies kann zur Optimierung der zweiten Verdichtungsstufe 6 genutzt werden, so dass eine optimale Abstimmung insbesondere eines End-Volumenstroms QE der zweiten Verdichtungsstufe 6, einer oberen Energiebegrenzung oE des Kompressors 4 sowie eines Kolbendurchmesser D2 der zweiten Verdichtungsstufe 6 erfolgen kann.

Gemäß Fig. 2 ist der mehrstufige Kolbenkompressor 4 mit der ersten und der zweiten Verdichtungsstufe 5, 6 in einer schematischen Ansicht dargestellt, die der in Fig. 1a dargestellten Ausführungsform mit einem Zusatzventil 24 und einem pneumatischen 2/2-Wegeventil als Sperrventil 26 entspricht. Die beiden Verdichtungsstufen 5, 6 sind über das Zwischenvolumen 13 miteinander verbunden, so dass die in der ersten Verdichtungsstufe 5 durch den ersten Kolben 8 vorverdichtete Luft L2 insbesondere im offenen Betriebsmodus BMo in die zweite Verdichtungsstufe 6 gefördert werden kann, um dort vom zweiten Kolben 9 weiter verdichtet zu werden.

Im geschlossenen Betriebsmodus BMc wird über die Speicherleitung 23 das Aufladedruckmittel A in das Zwischenvolumen 13 sowie über die Steuerleitung 26.2 an den Steuereingang 26.1 des Sperrventils 26 geleitet. Das pneumatische Sperrventil 26, die zugehörigen Übertragungsleitungen 23, 26.2 sowie das Zusatzventil 24 können platzsparend beispielsweise im Kompressordeckel 28 des Kompressorgehäuses 29 angeordnet werden.

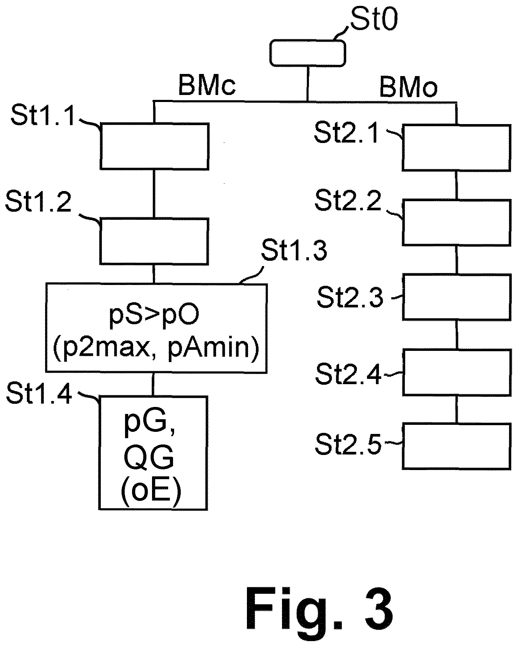

Gemäß Fig. 3 kann das erfindungsgemäße Verfahren zum Betreiben der Luftfederanlage im geschlossenen Betriebsmodus BMc wie folgt durchgeführt werden:
In einem anfänglichen Schritt St0 wird überprüft, welcher Betriebsmodus BMo, BMc der Druckregelanlage eingestellt ist.

Ist der geschlossenen Betriebsmodus BMc der Druckregelanlage 1 eingestellt, wird das Aufladedruckmittel A in einem ersten Schritt St1.1 über das jeweilige Schaltventil 22a, 22b freigegeben und über die Speicherleitung 23 in das Zwischenvolumen 13 eingelassen, von dem es über die zweite Verdichtungsstufe 6 erneut verdichtet wird. Über das Auslassventil 12 wird ein Einströmen in die erste Verdichtungsstufe 5 verhindert.

Gleichzeitig gelangt das Aufladedruckmittel A in einem zweiten Schritt St1.2 über die Steuerleitung 26.2 an den Steuereingang 26.1 des Sperrventils 26. Anschließend wird in einem dritten Schritt St1.3 das Sperrventil 26 in Abhängigkeit des am Steuereingang 26.1 anliegenden Steuerdruckes pS umgeschaltet, falls der Steuerdruck pS größer als der Schließdruck pO ist. Der Schließdruck pO kann hierbei derartig gewählt werden, dass das Zusatzventil 24, das im offenen Betriebsmodus BMo verhindert, dass das Sperrventil 26 durch das vorverdichtete Druckmittel L2 bereits öffnet, entfallen kann. Dazu ist der Schließdruck pO höher zu wählen als ein maximal erreichbarer Zwischendruck p2max, der durch die erste Verdichtungsstufe 5 zu erreichen ist. Weiterhin ist ein minimaler Aufladedruck pAmin des Aufladedruckmittels A zu berücksichtigen, so dass im offenen Betriebsmodus BMo ein unbeabsichtigtes Schließen des Sperrventils 26 und im geschlossenen Betriebsmodus BMc ein garantiertes Schließen des Sperrventils 26 und somit eine Leistungsreduktion gewährleistet werden kann.

Durch das Schließen des Sperrventils 26 wird in einem vierten Schritt St1.4 verhindert, dass die Ansaugluft L1 - vorzugsweise vollständig - in die erste Verdichtungsstufe 5 gelangt. Dadurch wird durch die erste Verdichtungsstufe 5 kein oder nur ein geringer Anteil an vorverdichtetem Druckmittel L2 in das Zwischenvolumen 13 gefördert und somit die Verdichtungsleistung der ersten Verdichtungsstufe 5 begrenzt, indem der Zwischendruck p2 auf den Grenzdruck pG und/oder der Zwischen-Volumenstrom Q2 auf den Grenz-Volumenstrom QG beschränkt wird. Ist ein vollständiges Abschalten der ersten Verdichtungsstufe 5 gewollt, gelangt kein vorverdichtetes Druckmittel L2 aus der ersten Verdichtungsstufe 5 in das Zwischenvolumen 13 und die Leistungsaufnahme der ersten Verdichtungsstufe 5 ist auf Reibungsverluste sowie in der ersten Verdichtungsstufe 5 verbliebenes Druckmittel begrenzt, pG und Q2 sind somit in etwa Null. Dieser Energiegewinn kann zur optimalen Abstimmung der zweiten Verdichtungsstufe 6 verwendet werden.

Die Begrenzung der Verdichtungsleistung im vierten Schritt St1.4 kann hierbei beispielsweise auch in Abhängigkeit einer oberen Energiebegrenzung oE erfolgen, so dass bei Überschreiten der oberen Energiebegrenzung oE ein größerer Anteil der Ansaugluft L1 reduziert wird, so dass die Leistungsaufnahme der ersten Verdichtungsstufe 5 und daher auch der Energieverbrauch des Kompressors 4 sinkt.

Im offenen Betriebsmodus BMo gelangt die Ansaugluft L1 aus der Atmosphäre 100 in einem Schritt St2.1 in die erste Verdichtungsstufe 5. In der ersten Verdichtungsstufe 5 wird die Ansaugluft L1 in einem zweiten Schritt St2.2 auf den Zwischendruck p2 vorverdichtet und in einem dritten Schritt St2.3 in das Zwischenvolumen 13 eingelassen. Aus dem Zwischenvolumen 13 gelangt das vorverdichtete Druckmittel L2 in die zweite Verdichtungsstufe 6, in der in einem vierten Schritt St2.4 eine erneute Verdichtung auf den Enddruck p3 stattfindet. In einem abschließenden Schritt St2.5 gelangt das verdichtete Druckmittel L3 in die Druckmittelkammern 3.i oder den Druckmittelvorrat 20.

### Bezugszeichenliste (Teil der Beschreibung)

- 1: Luftfederanlage
- 3.i: Druckmittelkammern
- 4: zweistufiger Kompressor
- 5: erste Verdichtungsstufe
- 5.1: erster Ansaugraum
- 5.2: erster Verdichtungsraum
- 6: zweite Verdichtungsstufe
- 6.1: zweiter Ansaugraum
- 6.2: zweiter Verdichtungsraum
- 7: Motor
- 8: erster Kolben der ersten Verdichtungsstufe
- 9: zweiter Kolben der zweiten Verdichtungsstufe
- 10: Ansaugleitung
- 11: erstes Einlassventil
- 12: erstes Auslassventil
- 13: Zwischenvolumen
- 14: zweites Einlassventil
- 15: zweites Auslassventil
- 16: Auslassleitung
- 17: Lufttrockner
- 18: Düse
- 19: Vorratsleitung
- 20: Druckmittelvorrat
- 21.i: steuerbare Ventile
- 22a: erstes Schaltventil
- 22b: zweites Schaltventil
- 23: Speicherleitung
- 24: Zusatzventil
- 26: Sperrventil (Wegeventil)
- 26.1: Steuereingang
- 26.2: Steuerleitung
- 27: Feder
- 28: Kompressordeckel
- 29: Kompressorgehäuse
- 30: Druckmessgerät
- 31: Ablassventil
- 100: Atmosphäre
- 126: Sperrventil (Proportionalitätsventil)
- 200: Fahrzeug

- A: Aufladedruckmittel
- BMo: offener Betriebsmodus
- BMc: geschlossener Betriebsmodus
- L1: Ansaugluft
- L2: vorverdichtete Luft
- L3: verdichtete Luft
- L4: gespeicherte Luft
- L5: Kammerluft
- L6: Mixluft
- oE: obere Energiebegrenzung
- NW: Nennweite
- pA: Aufladedruck
- pAmin: minimaler Aufladedruck
- p1: Luftdruck/Ansaugdruck
- p2: Zwischendruck
- p2max: maximaler Zwischendruck
- p3: Enddruck
- p4: Vorratsdruck
- p6: Mixdruck
- pG: Grenzdruck
- pO: Schließdruck
- pS: Steuerdruck
- VQ: Ventilquerschnitt
- Q1: Ansaug-Volumenstrom
- Q2: Zwischen-Volumenstrom
- QE: End-Volumenstrom
- QG: Grenz-Volumenstrom
- QS: Speicher-Volumenstrom
- QM: Mix-Volumenstrom

- St1.1, St1.2, St1.3, St1.4: Schritte des Verfahrens im BMc
- St2.1, St2.2, St2.3, St2.4, St2.5: Schritte des Verfahrens im BMo

## Patentansprüche

1. Verfahren zum Betreiben einer Druckregelanlage (1), insbesondere für Fahrzeuge (200), mit einem mehrstufigen Kompressor (4),
wobei von dem mehrstufigen Kompressor (4) ein mehrfach verdichtetes Druckmittel (L3) zum Befüllen eines Druckmittelvorrats (20) oder von Druckmittelkammern (3.i; i=1,...4) der Druckregelanlage (1) bereitgestellt wird (St1.1, St2.5), wobei dazu
- von einer ersten Verdichtungsstufe (5) ein vorverdichtetes Druckmittel (L2) bereitgestellt wird, das mindestens über eine zweite Verdichtungsstufe (6) zusätzlich verdichtet wird (St1.4, St2.3, St2.4), und ein bereits verdichtetes Aufladedruckmittel (A) in ein Zwischenvolumen (13) zwischen der ersten Verdichtungsstufe (5) und der zweiten Verdichtungsstufe (6) des mehrstufigen Kompressors (4) eingeleitet wird und das Aufladedruckmittel (A) zumindest von der zweiten Verdichtungsstufe (6) erneut verdichtet wird (St1.1) oder
- ein bereits verdichtetes Aufladedruckmittel (A) in ein Zwischenvolumen (13) zwischen der ersten Verdichtungsstufe (5) und der zweiten Verdichtungsstufe (6) des mehrstufigen Kompressors (4) eingeleitet wird und das Aufladedruckmittel (A) zumindest von der zweiten Verdichtungsstufe (6) erneut verdichtet wird (St1.1), **dadurch gekennzeichnet, dass** das Aufladedruckmittel (A) gleichzeitig über eine Steuerleitung (26.2) zu einem Steuereingang (26.1) eines mit der ersten Verdichtungsstufe (5) zusammenwirkenden Sperrventils (26) gelangt (St1.2), so dass ein Aufladedruck (pA) des Aufladedruckmittels (A) einen Steuerdruck (pS) des Sperrventils (26) vorgibt, wobei über das Sperrventil (26) eine vom Steuerdruck (pS) abhängige Druckbegrenzung (pG) und/oder Volumenstrombegrenzung (QG) des von der ersten Verdichtungsstufe (5) in das Zwischenvolumen (13) geförderten vorverdichteten Druckmittels (L2) eingestellt wird (St1.3) zum selbsttätigen Anpassen der Verdichtungsleistung der ersten Verdichtungsstufe (5) durch das in der Steuerleitung (26.2) befindliche Aufladedruckmittel (A), wobei
über das Sperrventil (26) zumindest ein Anteil eines der ersten Verdichtungsstufe (5) zugeführten, vorzuverdichtenden Druckmittels (L1) reduziert wird zum Ausbilden der Druckbegrenzung (pG) und/oder der Volumenstrombegrenzung (QG) des von der ersten Verdichtungsstufe (5) geförderten vorverdichteten Druckmittels (L2).

2. Verfahren nach Anspruch 1, **dadurch gekennzeichnet, dass** der Anteil des der ersten Verdichtungsstufe (5) zugeführten, vorzuverdichtenden Druckmittels (L1) in Abhängigkeit des Steuerdruckes (pS) stufenlos eingestellt wird.

3. Verfahren nach Anspruch 1 oder 2, **dadurch gekennzeichnet, dass** bei einem anteiligen Zuführen von vorzuverdichtendem Druckmittel (L1) ein druckbegrenztes (pG) und/oder volumenstrombegrenztes (QG), vorverdichtetes Druckmittel (L2) aus der ersten Verdichtungsstufe (5) in das Zwischenvolumen (13) gelangt und von dem mehrstufigen Kompressor (4) somit ein durch die zweite Verdichtungsstufe (6) verdichtetes Druckmittel (L3) bereitgestellt wird, das sowohl aus einer Verdichtung des Aufladedruckmittels (A) als auch einer Verdichtung des druckbegrenzten (pG) und/oder volumenstrombegrenzten (QG) vorverdichteten Druckmittels (L2) aus der ersten Verdichtungsstufe (5) gewonnen wird.

4. Verfahren nach einem der Ansprüche 1 bis 3, **dadurch gekennzeichnet, dass** der Anteil des der ersten Verdichtungsstufe (5) zugeführten, vorzuverdichtenden Druckmittels (L1) in Abhängigkeit einer oberen Energiebegrenzung (oE) des mehrstufigen Kompressors (4) eingestellt wird, wobei bei einem Überschreiten der oberen Energiebegrenzung (oE) der Anteil des der ersten Verdichtungsstufe (5) zugeführten, vorzuverdichtenden Druckmittels (L1) verringert wird.

5. Verfahren nach Anspruch 1, **dadurch gekennzeichnet, dass** das Sperrventil (26) in Abhängigkeit des Steuerdruckes (pS) entweder vollständig geöffnet oder vollständig geschlossen wird.

6. Verfahren nach Anspruch 5, **dadurch gekennzeichnet, dass** bei vollständig geschlossenem Sperrventil (26) ein Zuführen von vorzuverdichtendem Druckmittel (L1) in die erste Verdichtungsstufe (5) verhindert wird, so dass nahezu kein vorverdichtetes Druckmittel (L2) aus der ersten Verdichtungsstufe (5) in das Zwischenvolumen (13) gelangt, wobei dadurch die erste Verdichtungsstufe (5) pneumatisch abgeschaltet wird, und von dem mehrstufigen Kompressor (4) somit ein mehrfach verdichtetes Druckmittel (L3) bereitgestellt wird, das nahezu ausschließlich aus einer Verdichtung des Aufladedruckmittels (A) in der zweiten Verdichtungsstufe (6) gewonnen wird zum Verringern des Energieverbrauchs des Kompressors (4).

7. Verfahren nach einem der vorhergehenden Ansprüche, **dadurch gekennzeichnet, dass** das Aufladedruckmittel (A) durch Öffnen eines steuerbaren SpeicherventilSchaltventils (22a, 22b) in die Speicherleitung (23) eingelassen wird, wobei das Aufladedruckmittel (A) bei einem Öffnen des SpeicherventilSchaltventils (22a, 22b) sowohl in das Zwischenvolumen (13) als auch an den Steuereingang (26.1) des Sperrventils (26) geleitet wird.

8. Druckregelanlage (1), insbesondere für ein Fahrzeug (200), mindestens aufweisend:
einen mehrstufigen Kompressor (4) mit einer ersten Verdichtungsstufe (5) zum Bereitstellen eines vorverdichten Druckmittels (L2) und mindestens einer zweiten Verdichtungsstufe (6) zum Bereitstellen eines verdichteten Druckmittels (L3), wobei die erste Verdichtungsstufe (5) und die zweite Verdichtungsstufe (6) über ein Zwischenvolumen (13) miteinander verbunden sind zum Fördern des vorverdichteten Druckmittels (L2) über das Zwischenvolumen (13) in die zweite Verdichtungsstufe (6),
mindestens eine mit der zweiten Verdichtungsstufe (6) verbundene Druckmittelkammer (3.i; i=1 ...4),
einen mit der zweiten Verdichtungsstufe (6) verbundenen Druckmittelvorrat (20) zum Speichern des verdichteten Druckmittels (L3),
eine Speicherleitung (23), die den Druckmittelvorrat (20) oder die mindestens eine Druckmittelkammer (3.i) mit dem Zwischenvolumen (13) verbindet, zum Betreiben der Druckregelanlage (1) mit in dem Druckmittelvorrat (20) gespeichertem Druckmittel (L4) oder zum Rückführen eines in den Druckmittelkammern (3.i) genutzten Kammerdruckmittels (L5) in den Druckmittelvorrat (20), und
ein Sperrventil (26), wobei das Sperrventil (26) derartig mit der ersten Verdichtungsstufe (5) zusammenwirkt, dass in Abhängigkeit der Ansteuerung des Sperrventils (26) eine Druckbegrenzung (pG) und/oder eine Volumenstrombegrenzung (QG) des von der ersten Verdichtungsstufe (5) in das Zwischenvolumen (13) geförderten vorverdichteten Druckmittels (L2) erreichbar ist zum Anpassen einer Verdichtungsleistung der ersten Verdichtungsstufe (5),
**dadurch gekennzeichnet, dass**
von der Speicherleitung (23) eine Steuerleitung (26.2) zu einem pneumatischen Steuereingang (26.1) des Sperrventils (26) abzweigt, so dass das gespeicherte Druckmittel (L4) oder das Kammerdruckmittel (L5) als Aufladedruckmittel (A) dem Zwischenvolumen (13) sowie gleichzeitig über die Steuerleitung (26.2) dem Steuereingang (26.1) des Sperrventils (26) als Steuerdruck (pS) zuführbar ist zum selbstregulierenden pneumatischen Ansteuern des Sperrventils (26) durch das in der Steuerleitung (26.2) befindliche Aufladedruckmittel (A),
wobei weiterhin eine Sperrfunktion (24, pO) vorgesehen ist, die verhindert, dass das von der ersten Verdichtungsstufe (5) vorverdichtete Druckmittel (L2) über das Zwischenvolumen (13) und die Steuerleitung (26.2) das Sperrventil (26) für die Druckbegrenzung (pG) oder/oder die Volumenstrombegrenzung (QG) umschaltet, wobei
das Sperrventil (23) derartig angeordnet ist, dass ein Anteil eines der ersten Verdichtungsstufe (5) zugeführten, vorzuverdichtenden Druckmittels (L1) in Abhängigkeit des Steuerdruckes (pS) einstellbar ist zur Druckbegrenzung (pG) und/oder Volumenstrombegrenzung (QG) des von der ersten Verdichtungsstufe (5) in das Zwischenvolumen (13) geförderten vorverdichteten Druckmittels (L2).

9. Druckregelanlage (1) nach Anspruch 8, **dadurch gekennzeichnet, dass** das Sperrventil (26) in einer zur ersten Verdichtungsstufe (5) führenden Ansaugleitung (10) angeordnet ist, so dass durch die Stellung des Sperrventils (26) der Anteil des durch die Ansaugleitung (10) zur ersten Verdichtungsstufe (5) strömenden Druckmittels (L1) einstellbar ist.

10. Druckregelanlage (1) nach einem der Ansprüche 8 oder 9, **dadurch gekennzeichnet, dass** die Sperrfunktion durch ein zwischen dem Zwischenvolumen (13) und dem Sperrventil (26) angeordnetes Überdruckventil (24), beispielsweise einem Rückschlagventil (24), gewährleistet ist.

11. Druckregelanlage (1) nach einem der Ansprüche 8 bis 10, **dadurch gekennzeichnet, dass** die Sperrfunktion durch einen Schließdruck (pO) des Sperrventils (26) ausgebildet ist, wobei der Schließdruck (pO) den Druck angibt, ab dem das Sperrventil (26) in eine zumindest teilweise geschlossene Stellung übergeht,
wobei der Schließdruck (pO) größer ist als ein maximaler Zwischendruck (p2max) des von der ersten Verdichtungsstufe (5) vorverdichteten Druckmittels (L2) und niedriger als oder gleich einem minimalen Aufladedruck (pAmin) des Aufladedruckmittels (A),
wobei der maximale Zwischendruck (p2max) und der minimale Aufladedruck (pAmin) durch eine entsprechende Auslegung des mehrstufigen Kompressors (4) aufeinander abgestimmt sind.

12. Druckregelanlage (1) nach einem der Ansprüche 8 bis 11, **dadurch gekennzeichnet, dass** in der Speicherleitung (23) ein erstes steuerbares Schaltventil (22a) vorgesehen ist zum Freigeben des gespeicherten Druckmittels (L4) als Aufladedruckmittel (A) und ein zweites steuerbares Schaltventil (22b) zum Freigeben des Kammerdruckmittels (L5) als Aufladedruckmittel (A), wobei das freigegebene Aufladedruckmittel (A) aus der Speicherleitung (23) in das Zwischenvolumen (13) sowie an den Steuereingang (26.1) des Sperrventils (26) gelangt.

13. Druckregelanlage (1) nach Anspruch 12, **dadurch gekennzeichnet, dass** eine Nennweite (NW) der SpeicherventilSchaltventile (22a, 22b) zwischen 1mm und 4mm beträgt zum Erhöhen eines Speicher-Volumenstroms (QS) in das erste Zwischenvolumen (13) und eines End-Volumenstroms (QE) aus der zweiten Verdichtungsstufe (6).

14. Druckregelanlage (1) nach einem der Ansprüche 8 bis 13, **dadurch gekennzeichnet, dass** das Sperrventil (26) als pneumatisches Wegeventil mit einer Feder (27) ausgeführt ist zur stufenweisen Druckbegrenzung (pG) und/oder Volumenstrombegrenzung (QG) des vorverdichteten Druckmittels (L2).

15. Druckregelanlage (1) nach einem der Ansprüche 8 bis 13, **dadurch gekennzeichnet, dass** das Sperrventil (26) als pneumatisches Proportionalitätsventil (126) ausgeführt ist zur stufenlosen Druckbegrenzung (pG) und/oder Volumenstrombegrenzung (QG) des vorverdichteten Druckmittels (L2).

16. Druckregelanlage (1) nach einem der Ansprüche 8 bis 15, **dadurch gekennzeichnet, dass** das Sperrventil (26) sowie Komponenten (24) der Sperrfunktion (24, pO) in einem Kompressorgehäuse (29), beispielsweise einem Kompressordeckel (28), des mehrstufigen Kompressors (4) integriert sind.

17. Druckregelanlage (1) nach einem der Ansprüche 8 bis 16, **dadurch gekennzeichnet, dass** die Druckregelanlage (1) eine Luftfederanlage (1) in einem Fahrzeug (200), insbesondere einem Personenkraftwagen (200), ist.

18. Fahrzeug (200), insbesondere Personenkraftwagen (200), mit einer Druckregelanlage (1) nach einem der Ansprüche 8 bis 17 zur Durchführung des Verfahrens nach einem der Ansprüche 1 bis 7.

## Claims

1. A method of operating a pressure control installation (1), in particular for vehicles (200), with a multi-stage compressor (4), wherein a pressure medium (L3) compressed several times is provided (St1.1, St2.5) by the multi-stage compressor (4) for filling a pressure medium reservoir (20) or pressure medium chambers (3.i ; i=1, ... 4) of the pressure control installation (1), wherein, to this end
- a pre-compressed pressure medium (L2) is provided by a first compression stage (5), which pressure medium is further compressed (St1.4, St2.3, St2.4) at least via a second compression stage (6), and an already pre-compressed supercharging pressure medium (A) is introduced into an intermediate volume (13) between the first compression stage (5) and the second compression stage (6) of the multi-stage compressor (4) and the supercharging pression medium (A) is again compressed (St1.1) at least by the second compression stage (6) or
- an already pre-compressed supercharging pression medium (A) is introduced into an intermediate volume (13) between the first compression stage (5) and the second compression stage (6) of the multi-stage compressor (4) and the supercharging pression medium (A) is again compressed (St1.1), at least by the second compression stage (6),
**characterized in that**
the supercharging pressure medium (A) arrives simultaneously via a control line (26.2) to a control input (26.1) of a shutoff valve (26) which cooperates (St1.2) with the first compression stage (5), so that a supercharging pressure (pA) of the supercharging pressure medium (A) predefines a control pressure (pS) of the shutoff valve (26), wherein one pressure limitation (pG) and/or one volumetric flow rate limitation (QG) of the pressure medium (L2) pre-compressed and routed by the first compression stage (5) until the intermediate volume (13), depending on the control pressure (pS), is set (St1.3) via the shutoff valve (26) for the automatic adaptation of the compression power of the first compression stage (5) by the supercharging pressure medium (A) which is located in the control line (26.2), wherein
at least a proportion of a pression medium (L1) to be pre-compressed and supplied to the first compression stage (5) is reduced via the shutoff valve (26) for the formation of the pressure limitation (pG) and/or of the volumetric flow rate limitation (QG) of the pressure medium (L2) pre-compressed and routed by the first compression stage (5).

2. The method according to claim 1, **characterized in that** the proportion of the pressure medium (L1) to be pre-compressed and supplied to the first compression stage (5) is continuously set depending on the control pressure (pS).

3. The method according to claim 1 or 2, **characterized in that** during a proportional supply of the pressure medium (L1) to be pre-compressed a pre-compressed pressure medium (L2) limited by the pressure (pG) and/or limited by the volumetric flow rate (QG) reaches from the first compression stage (5) until the intermediate volume (13), and a pressure medium (L3) compressed by the second compression stage (6) is thus provided by the multi-stage compressor (4), which pressure medium is obtained from the first compression state (5) both from a compression of the supercharging pressure medium (A) and from a compression of the pre-compressed pressure medium (L2) and limited by the pressure (pG) and/or limited by the volumetric flow rate (QG).

4. The method according to one of claims 1 to 3, **characterized in that** the proportion of the pressure medium (L1) to be pre-compressed and supplied to the first compression stage (5) is set depending on an upper energy limitation (oE) of the multi-stage compressor (4), wherein, when the upper energy limitation (oE) is exceeded, the proportion of the pressure medium (L1) to be pre-compressed and supplied to the first compression stage (5) is reduced.

5. The method according to claim 1, **characterized in that** the shutoff valve (26) is either completely open or completely closed depending on the control pressure (pS).

6. The method according to claim 5, **characterized in that**, in the case of a completely closed shutoff valve (26), a supply of the pressure medium (L1) to be pre-compressed until the first compression stage (5) is prevented, so that nearly no pre-compressed pressure medium (L2) reaches from the first compression stage (5) until the intermediate volume (13), wherein in this way the first compression stage (5) is pneumatically disconnected, and a pressure medium (L3) compressed several times is thus provided by the multi-stage compressor (4), which pressure medium is obtained almost exclusively from a compression of the supercharging pressure medium (A) in the second compression stage (6) for the reduction of the energy consumption of the compressor (4).

7. The method according to one of the preceding claims, **characterized in that** the supercharging pressure medium (A) is admitted until the accumulation cable (23) by opening an accumulation valve/commutation valve (22a, 22b) which can be controlled, wherein the supercharging pressure medium (A) is guided both into the intermediate volume (13) and until the control input (26.1) of the shutoff valve (26) during an opening of the accumulation valve/commutation valve (22a, 22b).

8. A pressure control installation (1), in particular for a vehicle (200), comprising at least:
one multi-stage compressor (4) with a first compression stage (5) for providing a pre-compressed pressure medium (L2) and at least one second compression stage (6) for providing a pre-compressed pressure medium (L3), wherein the first compression stage (5) and the second compression stage (6) are linked together via an intermediate volume (13) in order to route the pre-compressed pressure medium (L2) until the second compression stage (6) via the intermediate volume (13),
at least one pressure medium chamber (3.i ; i=1, ... 4) linked to the second compression stage (6),
one pressure medium reservoir (20) linked to the second compression stage (6) to accumulate the compressed pressure medium (L3),
an accumulation cable (23) which links the pressure medium reservoir (20) or the at least one pressure medium chamber (3.i) with the intermediate volume (13) for operating the pressure control installation (1) with the pressure medium (L4) accumulated in the pressure medium reservoir (20) or for returning to the pressure medium reservoir (20) of a chamber pressure medium (L5) used in the pressure medium chambers (3.i), and
a shutoff valve (26), wherein the shutoff valve (26) cooperates with the first compression stage (5) in such a manner that, depending on the control of the shutoff valve (26), a pressure limitation (pG) and/or a volume flow rate limitation (QG) of the pressure medium (L2) pre-compressed and routed by the first compression stage (5) until the intermediate volume (13) can be reached for the adaptation of a compression power of the first compression stage (5),
**characterized in that**
a control cable (26.2) bifurcates from the accumulation cable (23) toward a pneumatic control input (26.1) of the shutoff valve (26), so that the accumulated pressure medium (L4) or the pressure medium chamber (L5) can be supplied to the intermediate volume (13) as supercharging pressure medium (A) as well as simultaneously via the control cable (26.2) at the control input (26.1) of the shutoff valve (26) as control pressure (pS) for the self-regulating pneumatic control of the shutoff valve (26) by the supercharging pressure medium (A) which is located in the control cable (26.2),
wherein in addition a blocking function (24, pO) is provided which prevents the pressure medium (L2) pre-compressed by the first compression stage (5) from commuting the shutoff valve (26) for the pressure limitation (pG) and/or the volume flow rate limitation (QG) via the intermediate volume (13) and the control cable (26.2), wherein
the accumulation cable (23) is arranged in such a manner that a proportion of the pressure medium (L1) to be pre-compressed and supplied to the first compression stage (5) can be set depending on the control pressure (pS) for pressure limitation (pG) of the pressure medium (L2) pre-compressed and routed from the first compression stage (5) until the intermediate volume (13).

9. The pressure control installation (1) according to claim 8, **characterized in that** the shutoff valve (26) is arranged in a suction reservoir (10) which leads to the first compression stage (5), so that the proportion of the pressure medium (L1) which flows through the suction reservoir (10) toward the first compression stage (5) can be set by the setting of the shutoff valve (26).

10. The pressure control installation (1) according to one of claims 8 or 9, **characterized in that** the blocking function is ensured by a discharge valve (24), for example a check valve (24), arranged between the intermediate volume (13) and the shutoff valve (26).

11. The pressure control installation (1) according to one of claims 8 to 10, **characterized in that** the blocking function is formed by a closing pressure (pO) of the shutoff valve (26), wherein the closing pressure (pO) indicates the pressure from which the shutoff valve (26) passes into a position that is at least partially closed,
wherein the closing pressure (pO) is greater than a maximum intermediate pressure (p2max) of the pressure medium (L2) pre-compressed by the first compression stage (5) and less than or equal to a minimum supercharging pressure (pAmin) of the supercharging pressure medium (A),
wherein the maximum intermediate pressure (p2max) and the minimum supercharging pressure (pAmin) are coordinated with one another by a corresponding dimensioning of the multi-stage compressor (4).

12. The pressure control installation (1) according to one of claims 8 to 11, **characterized in that**, in the accumulation cable (23), a first commutation valve (22a) which can be controlled is provided for the release of the accumulated pressure medium (L4) as supercharging pressure medium (A) and a second commutation valve (22b) which can be controlled is provided for the release of the chamber pressure medium (L5) as supercharging pressure medium (A), wherein the released supercharging pressure medium (A) reaches from the accumulation cable (23) until the intermediate volume (13) as well as at the control input (26.1) of the shutoff valve (26).

13. The pressure control installation (1) according to claim 12, **characterized in that** a nominal separation (NW) of the accumulation valves/commutation valves (22a, 22b) is between 1 mm and 4 mm for the elevation of an accumulation volume flow (QS) until the first intermediate volume (13) and an end volume flow (QE) from the second stage of compression (6).

14. The pressure control installation (1) according to one of claims 8 to 13, **characterized in that** the shutoff valve (26) is designed as a pneumatic distributor with a spring (27) for the stepwise pressure limitation (pG) and/or stepwise volumetric flow rate limitation (QG) of the pre-compressed pressure medium (L2).

15. The pressure control installation (1) according to one of claims 8 to 13, **characterized in that** the shutoff valve (26) is designed as a pneumatic proportioning valve (126) for the stepwise pressure limitation (pG) and/or the stepwise volume flow rate limitation (QG) of the pre-compressed pressure medium (L2).

16. The pressure control installation (1) according to one of claims 8 to 15, **characterized in that** the shutoff valve (26) as well as the components (24) of the blocking function (24, pO) are integrated into a compressor housing (29), for example a compressor cover (28), of the multi-stage compressor (4).

17. The pressure control installation (1) according to one of claims 8 to 16, **characterized in that** the pressure control installation (1) is a pneumatic spring installation (1) in a vehicle (200), in particular a private automobile (200).

18. A vehicle (200), in particular a private automobile (200) with a pressure control installation (1) according to one of claims 8 to 17, intended to execute the method according to one of claims 1 to 7.

## Revendications

1. Procédé d'exploitation d'une installation de régulation de pression (1), en particulier pour des véhicules (200) avec un compresseur (4) multi-étagé, dans lequel un moyen de pression (L3) comprimé plusieurs fois est fourni (St1.1, St2.5) par le compresseur (4) multi-étagé pour le remplissage d'une réserve de moyen de pression (20) ou de chambres de moyen de pression (3.i ; i=1, ... 4) de l'installation de régulation de pression (1), dans lequel à cet effet
- un moyen de pression (L2) pré-comprimé est fourni par un premier étage de compression (5), lequel moyen de pression est de plus comprimé (St1.4, St2.3, St2.4) au moins via un second étage de compression (6), et un moyen de pression de suralimentation (A) déjà pré-comprimé est introduit dans un volume intermédiaire (13) entre le premier étage de compression (5) et le second étage de compression (6) du compresseur (4) multi-étagé et le moyen de pression de suralimentation (A) est de nouveau comprimé (St1.1) au moins par le second étage de compression (6) ou
- un moyen de pression de suralimentation (A) déjà pré-comprimé est introduit dans un volume intermédiaire (13) entre le premier étage de compression (5) et le second étage de compression (6) du compresseur (4) multi-étagé et le moyen de pression de suralimentation (A) est de nouveau comprimé (St1.1) au moins par le second étage de compression (6),
**caractérisé en ce que**
le moyen de pression de suralimentation (A) parvient simultanément via un câble-pilote (26.2) à une entrée de commande (26.1) d'une valve d'arrêt (26) qui coopère (St1.2) avec le premier étage de compression (5), de sorte qu'une pression de suralimentation (pA) du moyen de pression de suralimentation (A) prédéfinisse une pression de commande (pS) de la valve d'arrêt (26), dans lequel une limitation de pression (pG) et/ou une limitation de débit volumique (QG) du moyen de pression (L2) pré-comprimé et acheminé par le premier étage de compression (5) jusque dans le volume intermédiaire (13), dépendantes de la pression de commande (pS), est réglée (St1.3) via la valve d'arrêt (26) pour l'adaptation automatique de la puissance de compression du premier étage de compression (5) par le moyen de pression de suralimentation (A) qui se trouve dans le câble-pilote (26.2), dans lequel
au moins une proportion d'un moyen de pression (L1) à pré-comprimer et amené au premier étage de compression (5) est réduite via la valve d'arrêt (26) pour la formation de la limitation de pression (pG) et/ou la limitation de débit volumique (QG) du moyen de pression (L2) pré-comprimé et acheminé par le premier étage de compression (5).

2. Procédé selon la revendication 1, **caractérisé en ce que** la proportion du moyen de pression (L1) à pré-comprimer et amené au premier étage de compression (5) est réglée en continu en fonction de la pression de commande (pS).

3. Procédé selon la revendication 1 ou 2, **caractérisé en ce que** lors d'une amenée proportionnelle du moyen de pression (L1) à pré-comprimer un moyen de pression (L2) pré-comprimé et limité par la pression (pG) et/ou limité par le débit volumique (QG) parvient depuis le premier étage de compression (5) jusque dans le volume intermédiaire (13), et un moyen de pression (L3) comprimé par le second étage de compression (6) est ainsi fourni par le compresseur (4) multi-étagé, lequel moyen de pression est obtenu depuis le premier étage de compression (5) tant d'une compression du moyen de pression de suralimentation (A) que d'une compression du moyen de pression (L2) pré-comprimé et limité par la pression (pG) et/ou limité par le débit volumique (QG).

4. Procédé selon l'une des revendications 1 à 3, **caractérisé en ce que** la proportion du moyen de pression (L1) à pré-comprimer et amené au premier étage de compression (5) est réglée en fonction d'une limitation d'énergie supérieure (oE) du compresseur (4) multi-étagé, dans lequel, lors d'un dépassement de la limitation d'énergie supérieure (oE), la proportion du moyen de pression (L1) à pré-comprimer et amené au premier étage de compression (5) est diminuée.

5. Procédé selon la revendication 1, **caractérisé en ce que** la valve d'arrêt (26) est soit complètement ouverte soit complètement fermée en fonction de la pression de commande (pS).

6. Procédé selon la revendication 5, **caractérisé en ce que**, dans le cas d'une valve d'arrêt (26) complètement fermée, une amenée du moyen de pression (L1) à pré-comprimer jusque dans le premier étage de compression (5) est empêchée, de sorte que presqu'aucun moyen de pression (L2) pré-comprimé ne parvienne depuis le premier étage de compression (5) jusque dans le volume intermédiaire (13), dans lequel le premier étage de compression (5) est ce faisant pneumatiquement débranché, et un moyen de pression (L3) comprimé plusieurs fois est ainsi fourni par le compresseur (4) multi-étagé, lequel moyen de pression est obtenu presque exclusivement depuis une compression du moyen de pression de suralimentation (A) dans le second étage de compression (6) pour la diminution de la consommation d'énergie du compresseur (4).

7. Procédé selon l'une des revendications précédentes, **caractérisé en ce que** le moyen de pression de suralimentation (A) est admis jusque dans le câble d'accumulation (23) en ouvrant une soupape d'accumulation/vanne de commutation (22a, 22b) qui peut être commandée, dans lequel le moyen de pression de suralimentation (A) est guidé tant jusque dans le volume intermédiaire (13) que jusqu'à l' entrée de commande (26.1) de la valve d'arrêt (26) lors d'une ouverture de la soupape d'accumulation/vanne de commutation (22a, 22b).

8. Installation de régulation de pression (1), en particulier pour un véhicule (200), comprenant au moins :
un compresseur (4) multi-étagé avec un premier étage de compression (5) pour fournir un moyen de pression (L2) pré-comprimé et au moins un second étage de compression (6) pour fournir un moyen de pression (L3) pré-comprimé, dans laquelle le premier étage de compression (5) et le second étage de compression (6) sont reliés ensemble via un volume intermédiaire (13) afin d'acheminer le moyen de pression (L2) pré-comprimé jusque dans le second étage de compression (6) via le volume intermédiaire (13),
au moins une chambre de moyen de pression (3.i ; i=1, ... 4) reliée au second étage de compression (6),
une réserve de moyen de pression (20) reliée au second étage de compression (6) pour l'accumulation du moyen de pression (L3) comprimé,
un câble d'accumulation (23) qui relie la réserve de moyen de pression (20) ou la au moins une chambre de moyen de pression (3.i) avec le volume intermédiaire (13) pour l'exploitation de l'installation de régulation de pression (1) avec le moyen de pression (L4) accumulé dans la réserve de moyen de pression (20) ou pour le renvoi jusque dans la réserve de moyen de pression (20) d'un moyen de pression de chambre (L5) utilisé dans les chambres de moyen de pression (3.i), et
une valve d'arrêt (26), dans laquelle la valve d'arrêt (26) coopère avec le premier étage de compression (5) de telle sorte qu'en fonction du pilotage de la valve d'arrêt (26) une limitation de pression (pG) et/ou une limitation de débit volumique (QG) du moyen de pression (L2) pré-comprimé et acheminé par le premier étage de compression (5) jusque dans le volume intermédiaire (13) puisse être atteinte pour l'adaptation d'une puissance de compression du premier étage de compression (5),
**caractérisée en ce que**
un câble-pilote (26.2) bifurque depuis le câble d'accumulation (23) vers une entrée de commande (26.1) pneumatique de la valve d'arrêt (26), de sorte que le moyen de pression (L4) accumulé ou le moyen de pression de chambre (L5) puisse être amené au volume intermédiaire (13) en tant que moyen de pression de suralimentation (A) ainsi que simultanément via le câble-pilote (26.2) à l'entrée de commande (26.1) de la valve d'arrêt (26) en tant que pression de commande (pS) pour le pilotage pneumatique autorégulant de la valve d'arrêt (26) par le moyen de pression de suralimentation (A) qui se trouve dans le câble-pilote (26.2),
dans laquelle en outre une fonction de blocage (24, pO) est prévue qui empêche que le moyen de pression (L2) pré-comprimé par le premier étage de compression (5) ne commute la valve d'arrêt (26) pour la limitation de pression (pG) et/ou la limitation de débit volumique (QG) via le volume intermédiaire (13) et le câble-pilote (26.2), dans laquelle
le câble d'accumulation (23) est agencé de telle sorte qu'une proportion d'un moyen de pression (L1) à pré-comprimer et amené au premier étage de compression (5) puisse être réglée en fonction de la pression de commande (pS) pour la limitation de pression (pG) du moyen de pression (L2) pré-comprimé et acheminé depuis le premier étage de compression (5) jusque dans le volume intermédiaire (13).

9. Installation de régulation de pression (1) selon la revendication 8, **caractérisée en ce que** la valve d'arrêt (26) est agencée dans une capacité d'aspiration (10) qui mène au premier étage de compression (5), de sorte que la proportion du moyen de pression (L1) qui s'écoule à travers la capacité d'aspiration (10) vers le premier étage de compression (5) puisse être réglée par le réglage de la valve d'arrêt (26).

10. Installation de régulation de pression (1) selon l'une des revendications 8 ou 9, **caractérisée en ce que** la fonction de blocage est assurée par une soupape de décharge (24), par exemple un clapet de non-retour (24), agencée entre le volume intermédiaire (13) et la valve d'arrêt (26).

11. Installation de régulation de pression (1) selon l'une des revendications 8 à 10, **caractérisée en ce que** la fonction de blocage est formée par une pression de fermeture (pO) de la valve d'arrêt (26), dans laquelle la pression de fermeture (pO) indique la pression à partir de laquelle la valve d'arrêt (26) passe dans une position au moins partiellement fermée,
dans laquelle la pression de fermeture (pO) est supérieure à une pression intermédiaire maximale (p2max) du moyen de pression (L2) pré-comprimé par le premier étage de compression (5) et inférieure ou égale à une pression de suralimentation minimale (pAmin) du moyen de pression de suralimentation (A),
dans laquelle la pression intermédiaire maximale (p2max) et la pression de suralimentation minimale (pAmin) sont coordonnées l'une par rapport à l'autre par un dimensionnement correspondant du compresseur (4) multi-étagé.

12. Installation de régulation de pression (1) selon l'une des revendications 8 à 11, **caractérisée en ce que**, dans le câble d'accumulation (23), une première vanne de commutation (22a) qui peut être commandée est prévue pour la libération du moyen de pression (L4) accumulé en tant que moyen de pression de suralimentation (A) et une seconde vanne de commutation (22b) qui peut être commandée est prévue pour la libération du moyen de pression de chambre (L5) en tant que moyen de pression de suralimentation (A), dans lequel le moyen de pression de suralimentation (A) libéré parvient depuis le câble d'accumulation (23) jusque dans le volume intermédiaire (13) ainsi qu'à l'entrée de commande (26.1) de la valve d'arrêt (26) .

13. Installation de régulation de pression (1) selon la revendication 12, **caractérisée en ce qu'**un écartement nominal (NW) des soupapes d'accumulation/vannes de commutation (22a, 22b) se situe entre 1 mm et 4 mm pour l'élévation d'un débit volumique d'accumulation (QS) jusque dans le premier volume intermédiaire (13) et d'un débit volumique d'extrémité (QE) depuis le second étage de compression (6).

14. Installation de régulation de pression (1) selon l'une des revendications 8 à 13, **caractérisée en ce que** la valve d'arrêt (26) est conçue en tant que distributeur pneumatique avec un ressort (27) pour la limitation de pression (pG) par étapes et/ou la limitation de débit volumique (QG) par étapes du moyen de pression (L2) pré-comprimé.

15. Installation de régulation de pression (1) selon l'une des revendications 8 à 13, **caractérisée en ce que** la valve d'arrêt (26) est conçue en tant que valve de proportionnalité (126) pneumatique pour la limitation de pression (pG) par étapes et/ou la limitation de débit volumique (QG) par étapes du moyen de pression (L2) pré-comprimé.

16. Installation de régulation de pression (1) selon l'une des revendications 8 à 15, **caractérisée en ce que** la valve d'arrêt (26) ainsi que des composantes (24) de la fonction de blocage (24, pO) sont intégrées à un logement de compresseur (29), par exemple un couvercle de compresseur (28), du compresseur (4) multi-étagé.

17. Installation de régulation de pression (1) selon l'une des revendications 8 à 16, **caractérisée en ce que** l'installation de régulation de pression (1) est une installation de ressort pneumatique (1) dans un véhicule (200), en particulier une voiture particulière (200).

18. Véhicule (200), en particulier voiture particulière (200), avec une installation de régulation de pression (1) selon l'une des revendications 8 à 17 destinée à exécuter le procédé selon l'une des revendications 1 à 7.
